(19) Europäisches Patentamt
European Patent Office
Office européen des brevets

(11) EP 1 897 916 A1

(12) # EUROPEAN PATENT APPLICATION

published in accordance with Art. 153(4) EPC

(43) Date of publication:
**12.03.2008 Bulletin 2008/11**

(21) Application number: **05765423.8**

(22) Date of filing: **29.06.2005**

(51) Int Cl.:
***C09C 1/48*** *(2006.01)* ***C09C 1/56*** *(2006.01)*

(86) International application number:
**PCT/JP2005/011943**

(87) International publication number:
**WO 2007/000817 (04.01.2007 Gazette 2007/01)**

(84) Designated Contracting States:
**DE FR GB IT**

(71) Applicant: **KONICA MINOLTA BUSINESS TECHNOLOGIES, INC.
Chiyoda-ku
Tokyo 100-0005 (JP)**

(72) Inventors:
- **ASAI, Shingo,
KONICA MINOLTA BUSINESS TECH. INC.
Tokyo 100-0005 (JP)**
- **UCHIDA,Masafumi,
KONICA MINOLTA BUSINESS TECH.INC.
Tokyo 100-0005 (JP)**

(74) Representative: **Gille Hrabal Struck Neidlein Prop Roos
Patentanwälte
Brucknerstrasse 20
40593 Düsseldorf (DE)**

(54) **CARBON BLACK LOADED COMPOSITION, COLORANT COMPOSITION AND CONDUCTIVE COMPOSITION**

(57) The present invention provides to a composition, a composition for coloring and a conductive composition, each of which contains new carbon black having a specific number average particle size of Feret's diameter.

The present invention relates to a composition containing carbon black, in which a number average particle size of Feret's diameter is 5 to 300 nm and primary particles are contained at 5% or more on a number basis.

The composition of the present invention is uniform in coloring and conductivity and makes it possible to be uniform in coloring and conductivity of final forms using those compositions.

EP 1 897 916 A1

## Description

### Technical Field

The present invention relates to a composition, a composition for coloring and a conductive composition, each of which contains carbon black having a number average particle size of Feret's diameter of 5 to 300 nm.
In particular, the present invention relates to a composition, a composition for coloring and a conductive composition, each of which contains stable carbon black primary particles.

### Background Art

Since carbon black is superior in coloring property, conductivity, weather resistance, chemical resistance and the like, the carbon black has been widely used for various applications, such as reinforcing agents for plastics and elastomers, and fillers.
Normally, the carbon black is composed of secondary particles formed by a plurality of basic particles that are chemically and/or physically combined with one another, that is, an aggregate (referred to also as a structure) (Fig. 4). This aggregate has a complex aggregated structure that is branched into irregular chain forms. Since the aggregates are formed into secondary aggregates by a Van der Waals force or through simple aggregation, adhesion, entangling, or the like, it has been difficult to obtain a sufficiently micro-dispersed structure. Moreover, because of a complex form, even when the carbon black is dispersed in, for example, a medium such as resin or rubber, uniform dispersion is difficult. Therefore, even when the resin is molded, coloring is lacking in uniformity and the resulting molded product becomes insufficient in degree of gloss and finish on its surface. Carbon black has been used as a conductive material. However, when a conventional carbon black is dispersed in a resin or a rubber, uniform disperse is difficult and resistance is lackinkg in uniformity.
Since the carbon black is in a powder or particle powder form, it is seldom used as a single material, and is normally dispersed uniformly in a solid-state base member, such as rubber and resin, or in a liquid, such as water and a solvent, to exert its characteristics. However, the carbon black is weak in its affinity to other substances, such as, for example, an organic polymer, water and an organic solvent, in comparison with its aggregating force among particles; therefore, it is very difficult to uniformly mix or disperse the carbon black under normal mixing or dispersing conditions.
In order to solve this problem, a number of attempts have been made to improve the dispersibility of carbon black, by coating the surface of carbon black with various kinds of surfactants and resins and improving the affinity to the solid-state base member or liquid.
For example, carbon black, which grafted by an organic compound obtained by polymerizing a polymerizable monomer in the presence of carbon black (aggregates), has drawn public attention because its hydrophilic property and/or lipophilic property can be altered appropriately by selecting the kind of the polymerizable monomer (for example, U.S. Patent No. 6,417,283). However, the use of carbon black prepared by a conventional method could not achieve such uniform coloring or conductivity as the inventors required.
In order to form carbon black into a finer structure, a lowered-structure forming process and a dividing process into basic particles forming the aggregates are proposed. However, simply the lowered-structure allows characteristics as the aggregate to be exerted, failing to improve the dispersibility sufficiently. Therefore, in the case of the dividing process into the basic particles, since the aggregating force of primary particles of carbon black is extremely strong, even when aggregates are finely divided, the finely divided aggregates immediately aggregate to form aggregates, failing to form stable primary particles.

### Disclosure of Invention

### Technical Problems to be Solved

The present invention has been made to solve the above-mentioned problems, and one object thereof is to provide a composition, a composition for coloring or a conductive composition, which contains a novel carbon black having a number average particle size of Feret's diameter that is set within a predetermined range.
Another object of the present invention is to provide a composition, a composition for coloring or a conductive composition, which contains carbon black in which primary particles are maintained in a stable state.
Still another object of the present invention is to provide a composition, a composition for coloring or a conductive composition, which is free from lack in uniformity of coloring or conductivity, or which makes it possible to show uniform coloring, concentration or conductivity when images, members or molded products are prepared by using the composition, the composition for coloring or the conductive composition.
Still another object of the present invention is to provide a composition, a composition for coloring or a conductive

composition which, when mixed with a resin or the like, can provide superior surface finish and surface gloss to the resulting molded product.

Means to Solve the Problems

The above-mentioned objects can be achieved by the following (1) to (9).

(1) A composition containing carbon black in which a number average particle size of Feret's diameter is 5 to 300 nm and primary particles are contained at 5% or more on a number basis.
(2) The composition described in the above-mentioned (1), in which the carbon black is surface-treated with an organic compound.
(3) The composition described in the above-mentioned (2), in which the organic compound includes at least one of a phenol-based compound and/or an amine-based compound.
(4) A composition for coloring which contains carbon black in which a number average particle size of Feret's diameter is 5 to 300 nm and primary particles are contained at 5% or more on a number basis.
(5) The composition for coloring described in the above-mentioned (4), in which the carbon black is surface-treated with an organic compound.
(6) The composition for coloring described in the above-mentioned (5), in which the organic compound includes at least one of a phenol-based compound and/or an amine-based compound.
(7) A conductive composition which contains carbon black in which a number average particle size of Feret's diameter is 5 to 300 nm and primary particles are contained at 5% or more on a number basis.
(8) The conductive composition described in the above-mentioned (7), in which the carbon black is surface-treated with an organic compound.
(9) The conductive composition described in the above-mentioned (8), in which the organic compound includes at least one of a phenol-based compound and/or an amine-based compound.

The inventors of the present invention have intensively studied in view of at least the above-mentioned problems and found that it is important that carbon black is made to contain more primary particles in order to exert the function of carbon black stably However, it was conventionally impossible to stably prepare primary particles from aggregates. The inventors of the present invention have considered that even when an attempt is made to finely divide carbon black aggregates, the carbon black again aggregates with one another to form aggregates, due to a strong aggregating force exerted among the carbon black. Consequently, they have found that re-aggregating portions can be eliminated and decomposed into joining portions among basic particles of aggregates so as not to be re-aggregated even when the aggregates are finely divided, so that stable primary particles can be obtained finally. By using such a carbon black, it becomes possible that a composition having uniform coloring property or uniform conductivity can be obtained in a state dispersed in a resin.

It was unexpected to find not only that it was possible to prepare such primary particles from aggregates, but also that presence of primary particles in an amount of at least 5% in a material was effective in reducing lack in uniformity of coloring and conductivity. Although the reasons are yet to be understood, presence of primary particles at a rate of at least 5% seems to be effective for uniform dispersion in the composition and prevention of lack in uniformity of coloring and conductivity. In other words, presence of fine primary particles to some extent apparently allows migration of the fine primary particles into the space between aggregate particles when the particles are dispersed in resin, thus enhancing uniformity of dispersion. It is thought that it becomes also possible, for example, to bring the primary particles into the region close to the surface of a resin or rubber molding and to improve surface physical properties thereof.

The following description will discuss primary particles in the present application. Normally, carbon black is present in an aggregate form, and the aggregate is a form, in which plurality of basic particles are chemically and/or physically aggregated. In the present application, the primary particles refer to the basic particles. However, the primary particles do not refer to the basic particles in a state in which the basic particles form an aggregate, but refer to particles that are present stably in a state in which the basic particles are separate from the aggregate. Secondary particles in the present application refer to an aggregate formed by aggregating the basic particles. Here, in the present application, secondary aggregates formed by aggregation of the aggregates are generally referred to as secondary particles.

Fig. 2 is a drawing illustrating the relationship between secondary particles and basic particles. The state formed by aggregating the basic particles is defined as a secondary particle. Fig. 3 represents a state in which basic particles that have formed secondary particles are separated from the secondary particles and are stably maintained, and this particle that is present as a single basic particle is defined as a primary particle.

The description will be further given as follows.

(1) number average particle size of Feret's diameter

The carbon black of the present invention has a number average particle size of Feret's diameter in the range from 5 to 300 nm. The range is preferably from 10 to 100 nm, particularly preferably from 10 to 80 nm.
By providing this range, the carbon blacks can be dispersed in, for example, a resin molded product all over, and in particular, as the chance that the surface irregularity thereof becomes extremely uneven decreases, the surface characteristics can be improved.

Here, an object to be measured in a number average particle size of Feret's diameter is each of the primary particles and the secondary particles of carbon black that are present in a stable state. In the case of carbon black that is present as an aggregate, the aggregate is the object to be measured, and the basic particles in the aggregate are not measured.
The controlling process into this number average particle size can be achieved by the following operations: the particles of the carbon black that are present as an aggregate and have basic particle sizes within the above-mentioned range are properly selected and processed, or conditions during the production process for dividing the aggregate into primary particles are altered.
The number average particle size of Feret's diameter can be observed by means of an electron microscope. Upon finding the number average particle size of Feret's diameter from carbon black simple substance, an enlarged photograph may be taken at magnification of 100000 by using a scanning electron microscope (SEM), and 100 particles may be properly selected to calculate the number average particle size of Feret's diameter.
In the case when the average particle size of carbon black is found from a molded product such as a resin, an enlarged photograph may be taken at magnification of 100000 by using a transmission electron microscope (TEM), and 100 particles may be properly selected to calculate the number average particle size.
The Feret's diameter, used in the present invention, refers to the largest length in a predetermined one direction of each of carbon black particles, among carbon black particles photographed by using the above-mentioned electron microscope. The largest length represents a distance between parallel lines, that is, two parallel lines that are drawn perpendicular to the predetermined one direction so as to be made in contact with the outer diameter of each particle.
For example, in Fig. 1, with respect to a photograph 300 of carbon black particles 200 taken by using an electron microscope, one direction 201 is arbitrarily determined. The distance between two straight lines 202 that are perpendicular to the predetermined direction 201 and made in contact with each carbon black particle 200 represents a Feret's diameter 203.
The carbon black of the present invention is preferably designed to have a number average particle size of Feret's diameter of the primary particles of 2 to 100 nm, and particularly 3 to 80 nm. By using the carbon black within this range, the strength thereof can be increased when dispersed in a resin molded product. The degree of gloss of the molded product can be improved, and a superior finished state can be achieved. The method for measuring the number average particle size of the primary particles is the same as the measuring method for the number average particle size of the carbon black. Here, the number of measured particles corresponds to 100 primary particles.
(2) Rate of Primary Particles
The carbon black of the present invention contains 5% or more of primary particles in the carbon black on a basis of number. The upper limit is 100%. The rate preferably varies depending on the industrial fields to which it is applied. As the rate of content of the primary particles increases, the better performance is obtained in the product in the industrial field. In the case of resin molded products, as the result that the dense dispersibility into resin is improved, the lack in uniformity or conductivity decreases, and mechanical strength, surface gloss property and the like can be improved. More specifically, the better results can be obtained in the order of 10% or more, 20% or more, 30% or more, 40% or more and 50% or more. Upon measuring the rate of the primary particles, the same process as described above is carried out by using the electron microscope, and the number of measured particles is calculated by counting the primary particles that are present in 1000 carbon black particles.
(3) Carbon Black
The carbon black of the present invention is preferably designed so that the surface of each of carbon black particles that are stably present finally is surface-treated with an organic compound or the like.
The surface treatment includes both adsorption state and graft state. In order to exert demonstrably the effects caused by the surface treatment with the organic compounds,it is preferable that the organic compound is grafted.
The rate of graft treatment is determined in the following manner when the organic compound is grafted..
Supposing that the amount of an organic compound prior to the reaction is Y and that the amount of the extracted organic compound is Z, the rate of graft treatment is represented by $((Y - Z) / Y) \times 100(\%)$.
The rate of graft treatment is preferably set to 50% or more. As the surface treatment of carbon black is carried out more uniformly, the dispersibility is further improved.
The carbon black of the present invention is preferably subjected to a graft treatment with an organic compound that has active free radicals or is capable of producing active free radicals, which will be described later. With this arrangement, it is possible not only to make primary particles of carbon black present stably but also to improve the

dispersibility in a medium and further to cancel lack in uniformity of coloring or conductivity and to improve mechanical strength.

(4) Production Method of Carbon Black

The following description will discuss a preferable production method of carbon black in accordance with the present invention.

A preferable production method to be applied to the present invention is provided with at least the following processes:

(A) Surface treatment process, in which the surface of carbon black containing secondary particles made of at least aggregates (structure) of basic particles is treated with an organic compound that has active free radicals or is capable of producing active free radicals; and

(B) A process, in which, by applying a mechanical shearing force to the carbon black containing at least secondary particles to give primary particles, and an organic compound is grafted onto a separation face from which the separation is made from the secondary particle.

The following description will discuss the processes (A) and (B) in detail.

(A) The surface treatment process, in which at least the surface of carbon black containing secondary particles made of at least aggregates (structure) of basic particles is treated with an organic compound that has active free radicals or is capable of producing active free radicals.

In this process, the surface of carbon black composed of aggregates (structure) is surface-treated with the above-mentioned organic compound.

In the present process, radicals are generated on the surface of a structure that is the minimum aggregation unit by applying heat or a mechanical force thereon, and the surface treatment is carried out by using an organic compound capable of capturing the radicals. By this process, re-aggregated portions that have been aggregated again by a strong aggregating force between the carbon blacks can be effectively reduced, so that the structure and the primary particles of the carbon black can be prevented from being aggregated and adhered.

The surface treatment includes a process in which an organic compound is adsorbed on the surface and a process in which the organic compound is grafted thereon. In order to stabilize the particles that have been formed into primary particles, the organic compound is preferably grafted onto the entire surface of a secondary particle at portions except for the surface where separation is made from the secondary particle. In order to allow the primary particles to be stably present after the grafting process, which will be described later, it is preferable to graft the organic compound onto the surface of the carbon black in this process.

With respect to the method for the surface treatment, for example, a method in which carbon black aggregates and an organic compound that has active free radicals or is capable of generating active free radicals are mixed with each other may be used. The surface treatment preferably includes a mixing process in which a mechanical shearing force is applied. That is, it is presumed that, in the process in which the mechanical shearing force is applied thereto, the surface of secondary particles of the carbon black is activated, and that the organic compound itself is activated by the shearing force to easily form a radicalized state, with the result that the grafting process of the organic compound onto the surface of the carbon black is easily accelerated.

In the surface treatment process, a device that is capable of applying a mechanical shearing force is preferably used.

The preferable mixing device to be used in the surface treatment process in the present invention includes: a Polylabo System Mixer (Thermo Electron Co., Ltd.), a refiner, a single-screw extruder, a twin-screw extruder, a planetary extruder, a cone-shaped-screw extruder, a continuous kneader, a sealed mixer, a Z-shaped kneader and the like.

When upon carrying out the surface treatment, the above-mentioned device is used, the degree of filling of mixture in the mixing zone of the mixing device is preferably set to 80% or more. The degree of filling is found by the following equation:

$$Z = Q/A$$

Z: degree of filling (%) Q: volume of filled matter ($m^2$) A: volume of cavity of mixing section ($m^2$)

In other words, by providing a highly filled state during the mixing process, the mechanical shearing force can be uniformly applied to the entire particles. When the degree of filling is low, the transmission of the shearing force becomes insufficient to fail to accelerate the activity of the carbon black and the organic compound, with the result that the grafting process might hardly progress.

During the mixing process, the temperature of the mixing zone is set to the melting point of the organic compound

or more, preferably within the melting point +200°C, more preferably within the melting point +150°C. In the case when a plurality of kinds of organic compounds are mixed, the temperature setting is preferably carried out with respect to the melting point of the organic compound having the highest melting point.

During the mixing process, irradiation of electromagnetic waves, such as ultrasonic waves, microwaves, ultraviolet rays and infrared rays, ozone function, function of an oxidant, chemical function and/or mechanical shearing force function may be used in combination so that the degree of the surface treatment and the process time can be altered. The mixing time is set to 15 seconds to 120 minutes, although it depends on the desired degree of the surface treatment. It is preferably set to 1 to 100 minutes.

The organic compound to be used for the surface treatment is added to 100 parts by weight of carbon black, within the range from 5 to 300 parts by weight, to carry out the surface treatment process. More preferably, it is set to 10 to 200 parts by weight. By adding the organic compound within this range, it is possible to allow the organic compound to uniformly adhere to the surface of the carbon black, and also to supply such a sufficient amount that the organic compound is allowed to adhere to separated faces to be generated at the time when the secondary particles are formed. For this reason, it becomes possible to effectively prevent decomposed primary particles from again aggregating, and also to reduce the possibility of losing inherent characteristics of the carbon black in the finished carbon black, due to an excessive organic compound contained therein when excessively added beyond the above-mentioned amount of addition.

(B) The process in which, by applying a mechanical shearing force to carbon black containing at least secondary particles to give primary particles, and an organic compound is grafted onto separated faces from which the separation is made from the secondary particle.

The present process corresponds to a process in which the carbon black having reduced re-aggregation portions by the surface treatment process is cleaved so that secondary particles are formed into primary particles and the organic compound is grafted onto the surface thereof so that stable primary particles are formed. That is, for example, a mechanical shearing force is applied to the carbon black that has been surface-treated with the organic compound, and while the aggregated portion of basic particles is being cleaved, the organic compound is grafted onto the cleaved portion so that the re-aggregation of the carbon black is suppressed. When the mechanical shearing force is continuously applied to the carbon black, the cleaved portion is expanded, and the organic compound is grafted onto the separated faces caused by the cleavage while being formed into primary particles. Thus, at the time when the separation is finally made to form primary particles, no active portions capable of aggregating are present so that stable primary particles are prepared. In this case, since the same mechanical shearing force is also applied to the added organic compound, the organic compound itself is activated by the mechanical shearing force so that the graft treatment is accelerated.

The above-mentioned grafting process is a process in which an organic compound that has active free radicals or is capable of producing active free radicals is grafted onto at least a cleaved portion; however, the grafting process may be simultaneously carried out at portions other than the cleaved portion. The grafting process may be carried out simultaneously, while the surface treatment process is being executed, or may be carried out as a separated process.

With respect to the means used for causing the cleavage, various methods, which include irradiation of electromagnetic waves, such as ultrasonic waves, microwaves, ultraviolet rays and infrared rays, ozone function, function of an oxidant, chemical function and mechanical shearing function, may be adopted.

In the present invention, the cleavage is preferably caused by applying at least a mechanical shearing force. Carbon black (structure), surface-treated with an organic compound, is placed in a place where a mechanical shearing force is exerted, and the surface-treated carbon black is preferably treated to give primary particles from the structure. Upon applying the mechanical shearing force, any of the above-mentioned methods used for causing the cleavage may be used in combination.

The same shearing force as the mechanical shearing force used in the surface treatment process is preferably used as the mechanical shearing force in this process.

As described above, the function of the mechanical shearing force is used not only for forming carbon black into fine particles from aggregates to primary particles, but also for cutting chains inside the carbon black to generate active free radicals. The organic compound, which is used in the present invention, and has free radicals or is capable of generating free radicals, includes, for example, an organic compound that is divided by receiving, for example, a function of the field of the mechanical shearing force to be allowed to have or generate active free radicals. In the case when the active free radicals are not sufficiently generated only by the function of the mechanical shearing force, the number of the active free radicals may be compensated for, by using irradiation with electromagnetic waves, such as ultrasonic waves, microwaves, ultraviolet rays and infrared rays, function of ozone or function of an oxidant.

With respect to the device for applying the mechanical shearing force, for example, the following devices may be used: a Polylabo System Mixer (Thermo Electron Co., Ltd.), a refiner, a single-screw extruder, a twin-screw extruder, a planetary extruder, a cone-shaped-screw extruder, a continuous kneader, a sealed mixer and a Z-shaped kneader. With respect to the conditions under which the mechanical shearing force is applied, the same conditions as those in the aforementioned surface treatment process are preferably used from the viewpoint of effectively applying the mechanical shearing force. By using these devices, the mechanical energy is uniformly applied to the entire particles effectively as well as continuously so that the grafting process can be preferably carried out effectively as well as uniformly.

In the above-mentioned surface treatment process and grafting process, the organic compound to be added may be gradually added continuously or intermittently so as to be set to a predetermined amount thereof, or a predetermined amount thereof may be added at the initial stage of the surface treatment process, and processes up to the grafting process may be executed.

With respect to the organic compound to be used for the surface treatment process as a material for the surface treatment and the organic compound to be used for the grafting process as a material to be graft-reacted, the same compounds may be used, or different compounds may be used.

The above-mentioned grafting process is preferably carried out under the condition of the melting point of the used organic compound or more. The upper limit of the temperature condition is preferably set, in particular, within the melting point +200°C, more preferably within the melting point +150°C from the viewpoints of accelerating the grafting reaction and the division into primary particles. In the case when a plurality of kinds of organic compounds are mixed, it is preferable to carry out the temperature setting with respect to the melting point of the organic compound having the highest melting point.

The period of time during which the mechanical shearing force is applied is preferably set within the range from 1 to 100 minutes so as to sufficiently execute the process, from the viewpoint of improving the homogeneity of the reaction.

In the above-mentioned production method, the mechanical shearing force is preferably applied thereto by mixing carbon black and an organic compound that will be described later, without using a solvent. Since the shearing force is applied at a temperature of the melting temperature of the organic compound or more during the reaction, the organic compound is formed into a liquid state and well attached to the surface of the carbon black that is a solid substance uniformly so that the reaction is allowed to proceed effectively. In the case when a solvent is used, although the homogeneity is improved, the transmission of energy is lowered upon applying the mechanical shearing force to cause a low level of activation, with the result that it presumably becomes difficult to effectively carry out the grafting process.

The method of adjusting the amount of primary particles is not particularly limited, and it is possible to adjust it by changing the condition for applying mechanical shearing force as described above. More specifically, it is possible to adjust the rate of primary particles, by changing the mechanical shearing force by adjusting a degree of filling of carbon particles to 80% or more in the mixing zone in a mixer for providing the shearing force and then modifying the degree of filling. It is also possible to adjust it by changing the agitation torque for mixing, and the torque can be controlled by modification of the degree of filling described above or by adjustment of the agitation frequency and temperature. More specifically, decrease of the temperature during mixing results in increase of the viscosity of the organic compound in the molten state, and thus, increase in torque and also increase of the shearing force, i.e., increase in the amount of the primary particles.

2) Carbon Black as Starting Material

Examples of an applicable carbon black include furnace black, channel black, acetylene black, Lamp Black, and the like and any of these are commercially available and carbon blacks having an aggregate structure are used. This aggregate structure has "a structure constitution" formed with primary particles or basic particles aggregated, which means a so-called carbon black formed into secondary particles, made of an aggregate of the primary particles. In order to smoothly carry out the surface treatment and grafting reaction of an organic compound onto carbon black, sufficient amounts of oxygen-containing functional groups, such as a carboxyl group, a quinone group, a phenol group and a lactone group, and active hydrogen atoms on the layer face peripheral edge, are preferably placed on the surface of the carbon black. For this reason, the carbon black to be used in the present invention is preferably allowed to have an oxygen content of 0.1% or more and a hydrogen content of 0.2% or more. In particular, the oxygen content is 10% or less and the hydrogen content is 1% or less.

Each of the oxygen content and the hydrogen content is found as a value obtained by dividing the number of oxygen elements or hydrogen elements by the total number of elements (sum of carbon, oxygen and hydrogen elements).

By selecting these ranges, it is possible to smoothly carry out the surface treatment and grafting reaction of an organic compound onto carbon black.

By selecting the above-mentioned ranges, an organic compound that has free radicals or is capable of generating free radicals is certainly grafted onto carbon black so that the re-aggregation preventive effect can be improved. In the case when the oxygen content and hydrogen content of the carbon black surface are smaller than the above-mentioned ranges, a gaseous phase oxidizing process, such as a heated air oxidization and an ozone oxidization, or a liquid phase oxidizing process by the use of nitric acid, hydrogen peroxide, potassium permanganate, sodium hypochlorite, or bromine water, may be used to increase the oxygen content and the hydrogen content of the carbon black.

3) Organic Compound

An organic compound to be used for surface-treating carbon black in the surface treatment, or to be grafted onto carbon black in the grafting process, corresponds to an organic compound that has free radicals or is capable of generating

free radicals.
In the organic compound that is capable of generating free radicals, although not particularly limited, the condition for generating free radicals requires a state in which the organic compound possesses free radicals during the grafting process, in the case of the organic compound to be used in the present invention. With respect to the organic compound, a compound capable of generating free radicals by at least electron movements, a compound capable of generating free radicals through thermal decomposition and a compound capable of generating free radicals derived from cleavage of the compound structure due to a shearing force or the like, may be preferably used.

With respect to the organic compound that has free radicals or is capable of generating free radicals to be used in the present invention, its molecular weight is preferably 50 or more, and the upper limit is preferably 1500 or less. By adopting the organic compound having a molecular weight within this range, it is possible to form carbon black whose surface is substituted by an organic compound having a high molecular weight to a certain degree, and consequently to restrain the resulting primary particles from being re-aggregated. By using the organic compound having a molecular weight of 1500 or less, an excessive surface modification can be avoided, and the characteristics of the organic compound grafted onto the surface are prevented from being excessively exerted; thus, it becomes possible to sufficiently exert the characteristics of the carbon black itself.

With respect to the organic compound to be used for the surface treatment process and the organic compound to be used for the grafting process, the same compound may be used, or different compounds may be used, and a plurality of kinds of organic compounds may be added to the respective processes. In order to control the reaction temperatures and simplify the other conditions, the same organic compound is preferably used for the surface treatment process as well as for the grafting process.

Examples of the organic compound include organic compounds that can capture free radicals on the surface of carbon black, such as a phenol-based compound, an amine-based compound, a phosphate-based compound and a thioether-based compound.

So-called antioxidants and photostabilizers are preferably used as these organic compounds. More preferably, hindered-phenol based ones and hindered-amine based ones may be used. Those antioxidants of phosphate ester-based compounds, thiol-based compounds and thioether-based compounds may also be used. A plurality of these organic compounds may be used in combination. Depending on the combinations thereof, various characteristics for the surface treatment can be exerted.
In order to positively control the reaction, these organic compounds are preferably the ones not having an isocyanate group. That is, in the case when an organic compound having an excessive reactivity is used, it becomes difficult to provide a uniform grafting reaction, sometimes resulting in a prolonged reaction time and a large quantity of the organic compound to be used. Although not clearly confirmed, the reason for this is presumably because in the case of using an organic compound having a high reactivity as described above, the reaction tends to progress at points other than the surface active points, with the result that the reaction to the active points formed by the mechanical shearing force, which is an original object, becomes insufficient.

Specific examples of the organic compound are shown below:

Phenol-based compounds.
(Organic compounds 1 to 88)

(Organic compound 1)

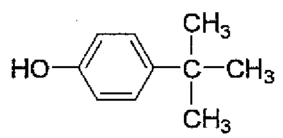

(Organic compound 2)

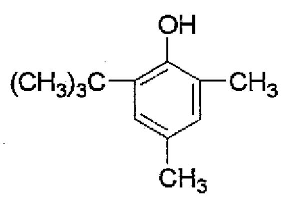

(Organic compound 3)

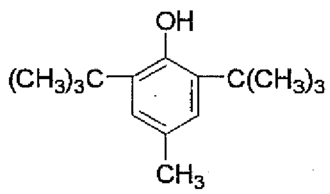

(Organic compound 4)

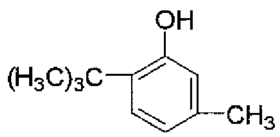

(Organic compound 5)

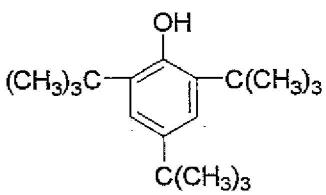

(Organic compound 6)

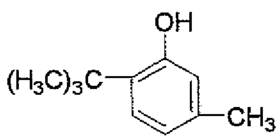

(Organic compound 7)

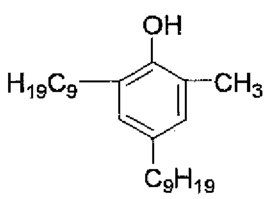

(Organic compound 8)

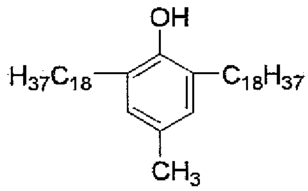

(Organic compound 9)

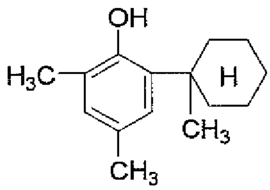

(Organic compound 10)

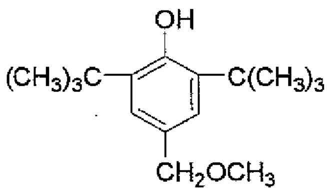

(Organic compound 11)

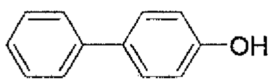

(Organic compound 12)

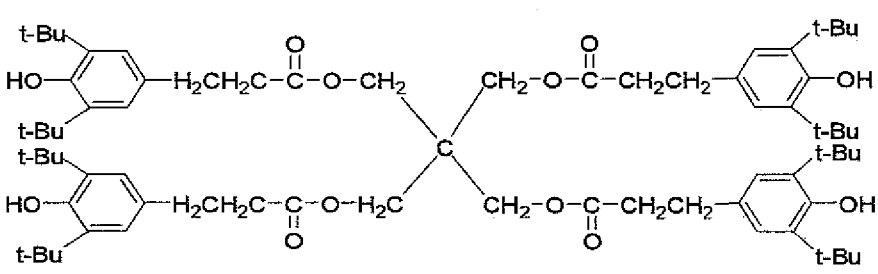

(Organic compound 13)

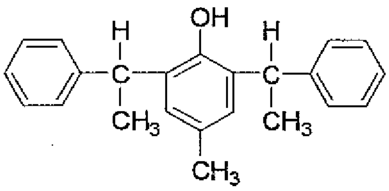

(Organic compound 14)

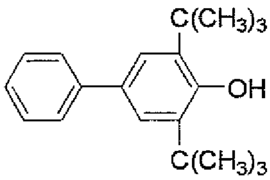

(Organic compound 15)

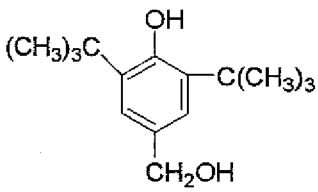

(Organic compound 16)

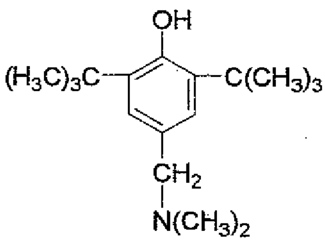

(Organic compound 17)

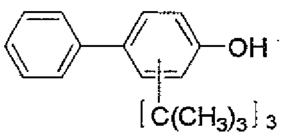

(Organic compound 18)

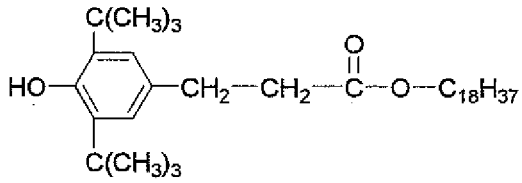

(Organic compound 19)

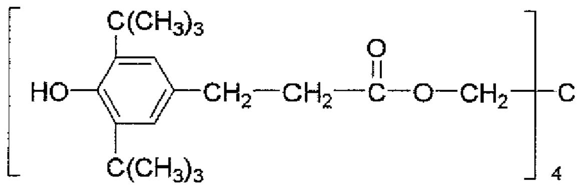

(Organic compound 20)

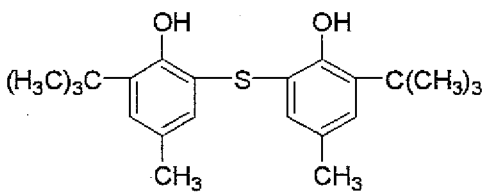

(Organic compound 21)

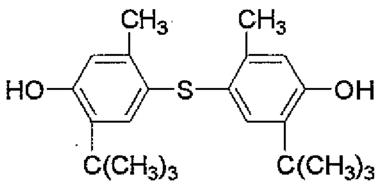

(Organic compound 22)

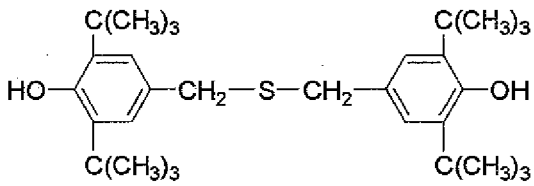

(Organic compound 23)

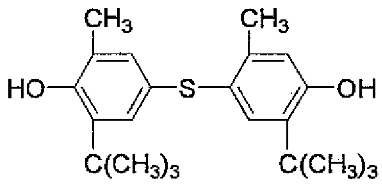

(Organic compound 24)

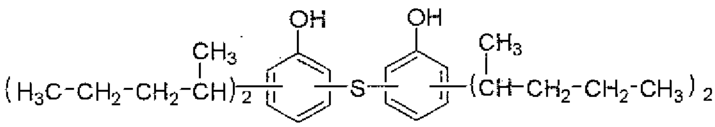

(Organic compound 25)

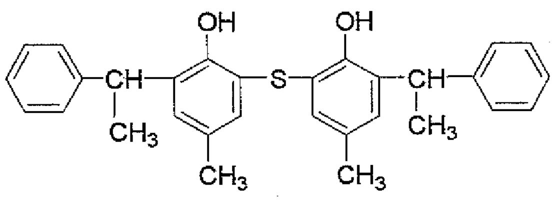

(Organic compound 26)

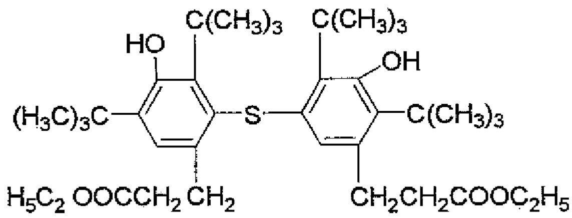

(Organic compound 27)

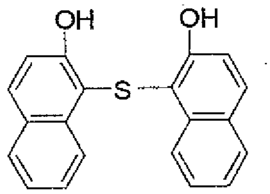

(Organic compound 28)

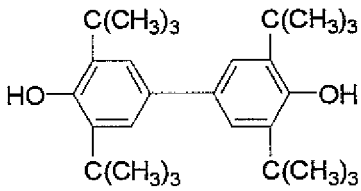

(Organic compound 29)

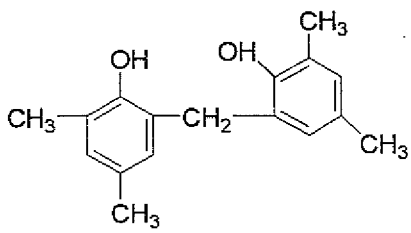

(Organic compound 30)

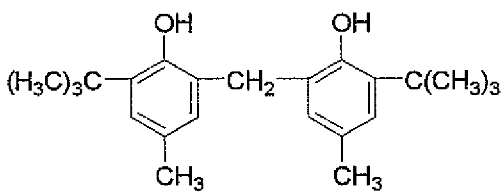

(Organic compound 31)

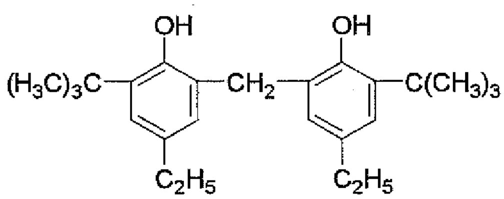

(Organic compound 32)

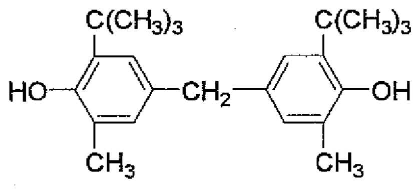

(Organic compound 33)

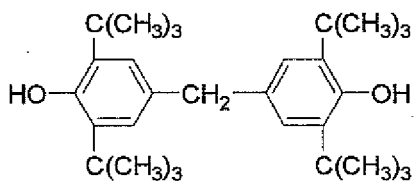

(Organic compound 34)

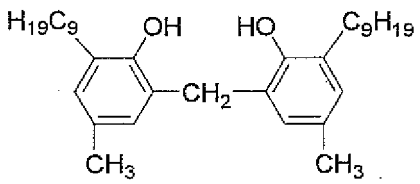

(Organic compound 35)

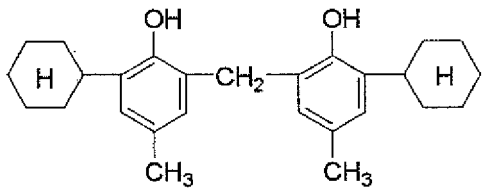

(Organic compound 36)

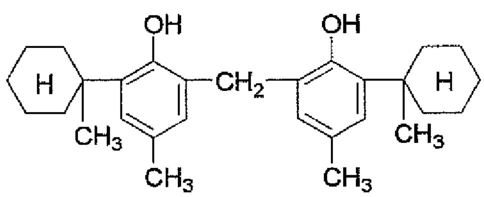

(Organic compound 37)

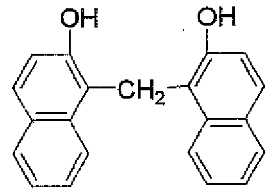

(Organic compound 38)

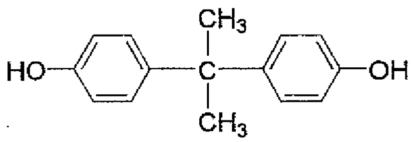

(Organic compound 39)

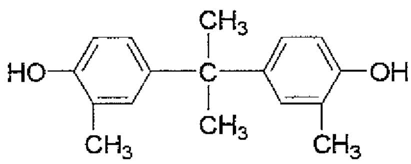

(Organic compound 40)

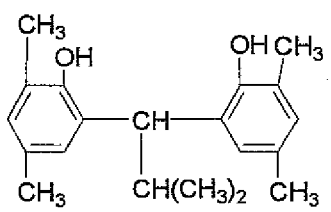

(Organic compound 41)

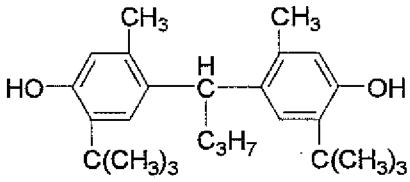

(Organic compound 42)

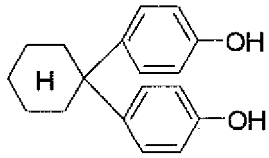

(Organic compound 43)

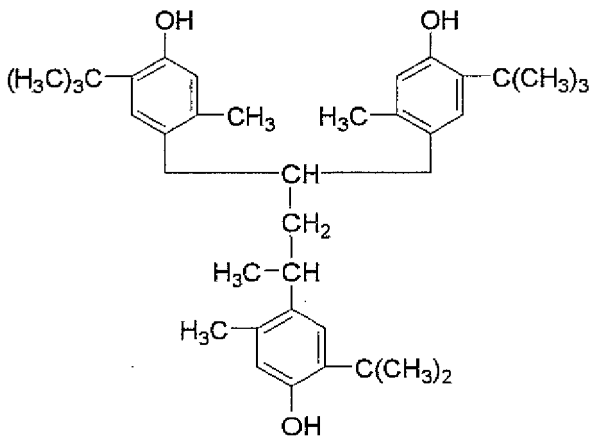

(Organic compound 44)

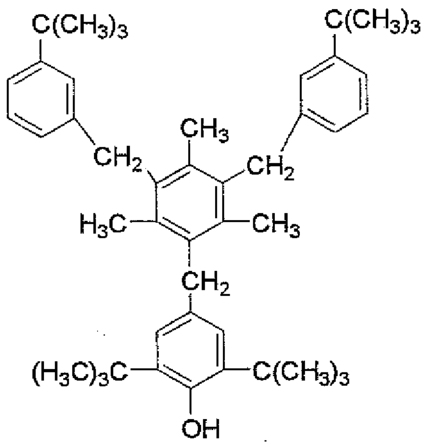

(Organic compound 45)

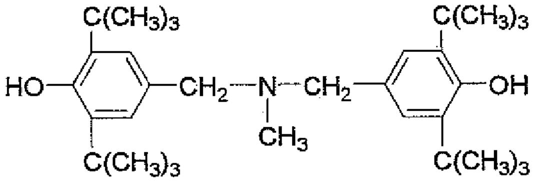

(Organic compound 46)

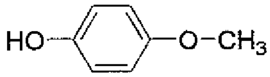

(Organic compound 47)

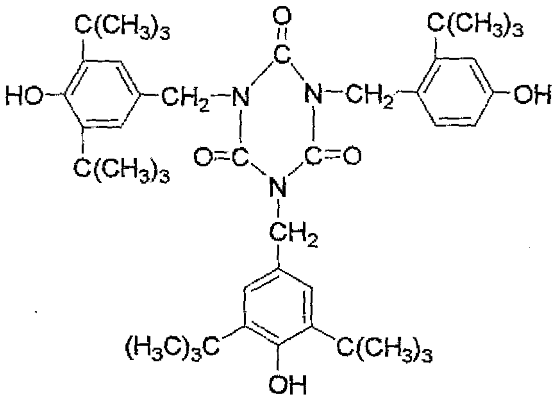

(Organic compound 48)

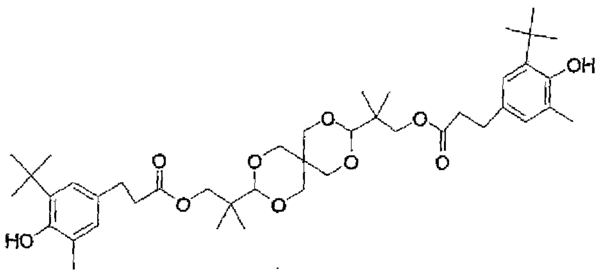

(Organic compound 49)

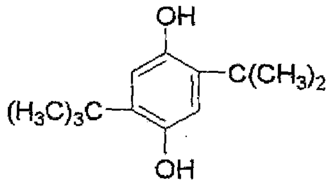

(Organic compound 50)

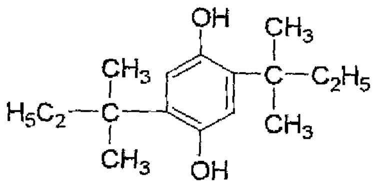

(Organic compound 51)

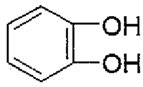

(Organic compound 52)

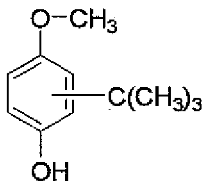

(Organic compound 53)

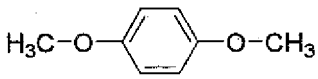

(Organic compound 54)

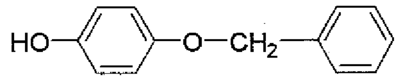

(Organic compound 55)

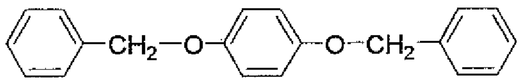

(Organic compound 56)

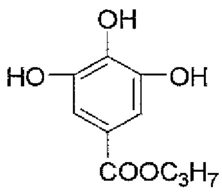

(Organic compound 57)

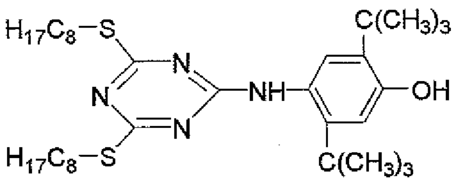

(Organic compound 58)

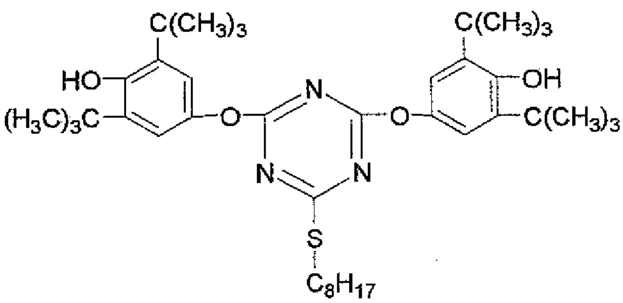

(Organic compound 59)

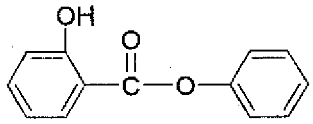

(Organic compound 60)

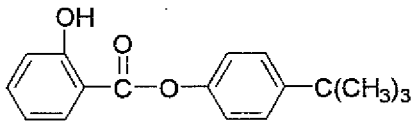

(Organic compound 61)

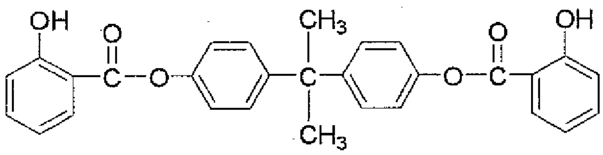

(Organic compound 62)

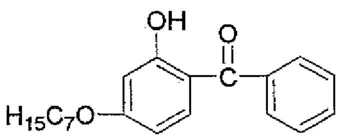

(Organic compound 63)

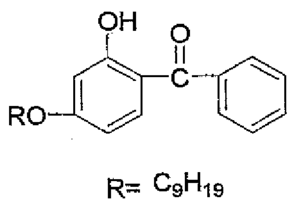

(Organic compound 64)

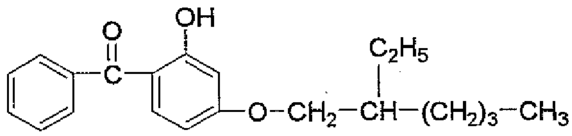

(Organic compound 65)

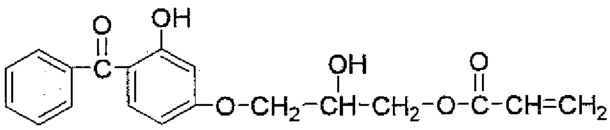

(Organic compound 66)

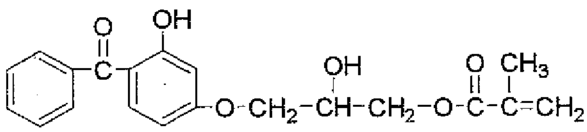

(Organic compound 67)

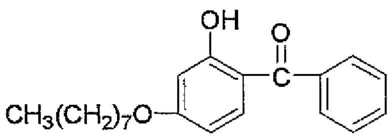

(Organic compound 68)

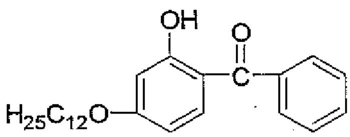

(Organic compound 69)

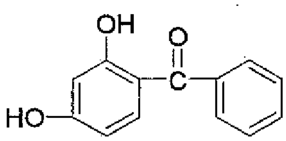

(Organic compound 70)

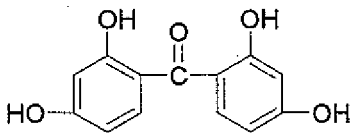

(Organic compound 71)

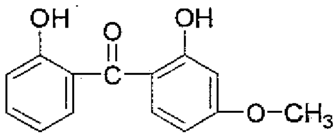

(Organic compound 72)

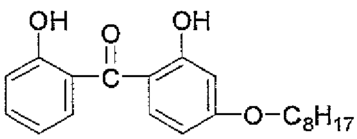

(Organic compound 73)

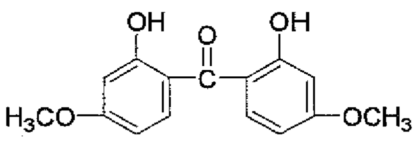

(Organic compound 74)

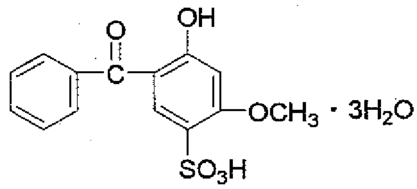

(Organic compound 75)

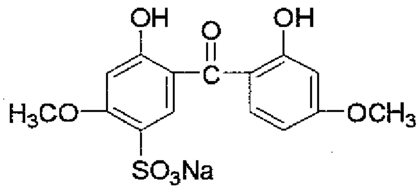

(Organic compound 76)

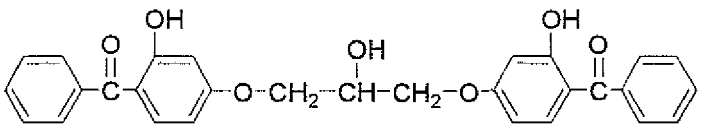

(Organic compound 77)

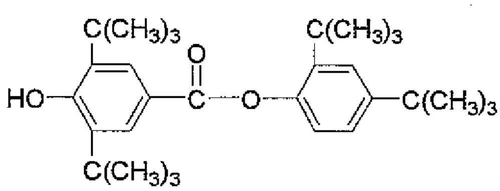

(Organic compound 78)

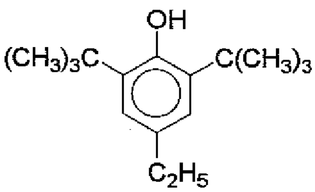

(Organic compound 79)

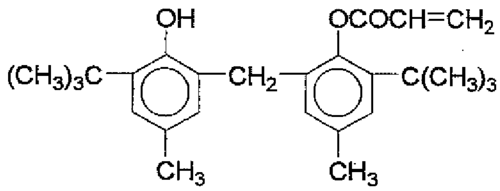

(Organic compound 80)

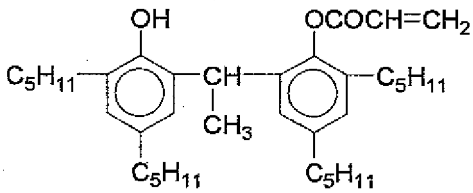

(Organic compound 81)

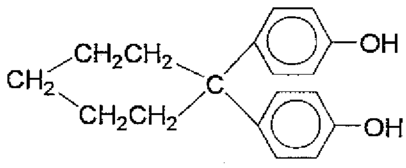

(Organic compound 82)

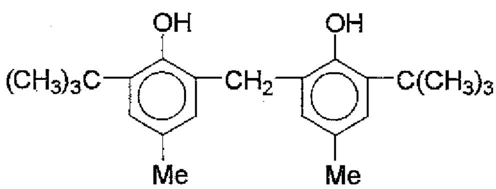

(Organic compound 83)

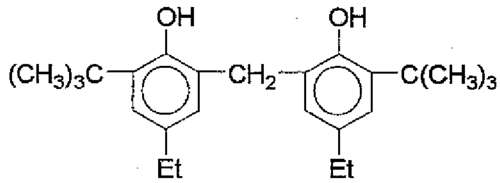

(Organic compound 84)

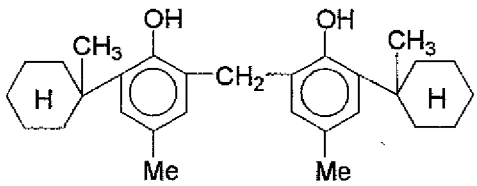

(Organic compound 85)

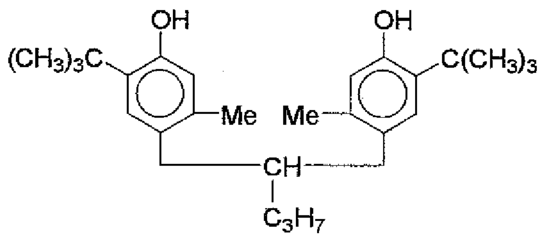

(Organic compound 86)

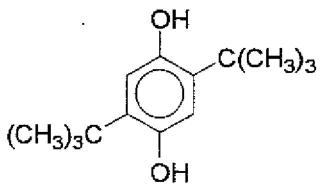

(Organic compound 87)

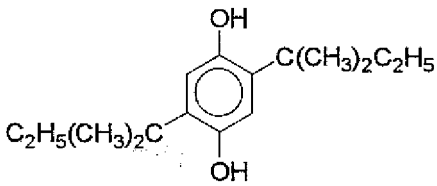

(Organic compound 88)

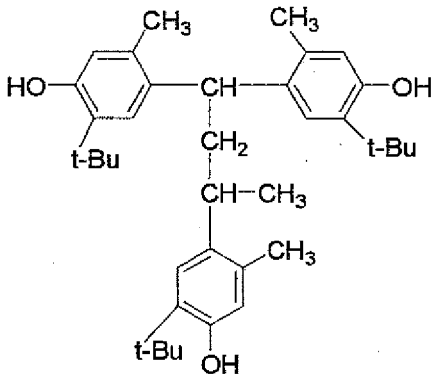

Amine-based compounds
(Organic compounds 89 to 144)

(Organic compound 89)

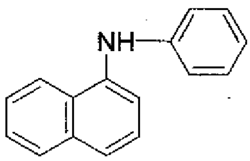

(Organic compound 90)

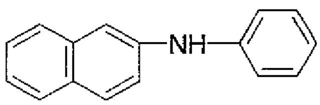

(Organic compound 91)

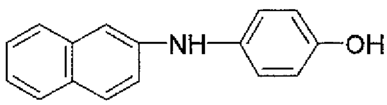

(Organic compound 92)

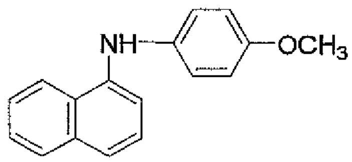

(Organic compound 93)

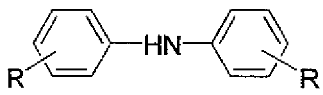

R= $C_7H_{15}$

(Organic compound 94)

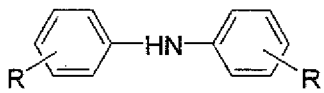

R= $C_8H_{17}$

(Organic compound 95)

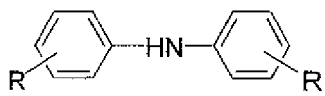

R= $C_9H_{19}$

(Organic compound 96)

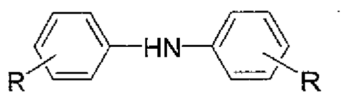

R= $C_{10}H_{21}$

(Organic compound 97)

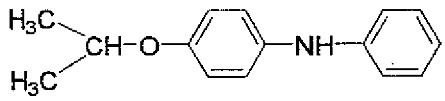

(Organic compound 98)

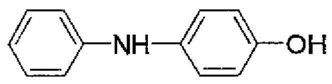

(Organic compound 99)

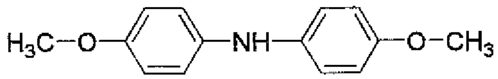

(Organic compound 100)

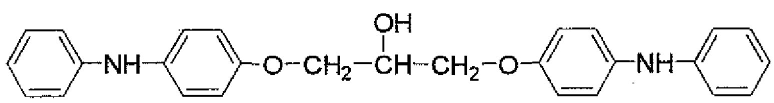

(Organic compound 101)

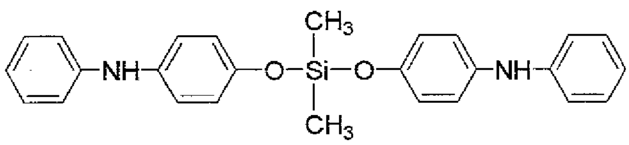

(Organic compound 102)

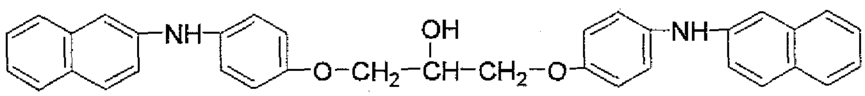

(Organic compound 103)

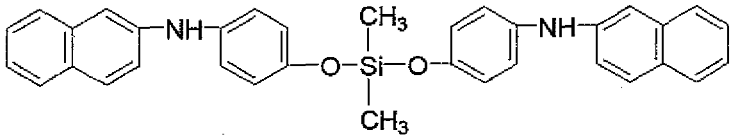

(Organic compound 104)

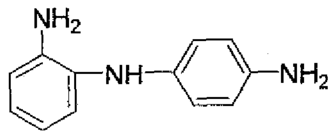

(Organic compound 105)

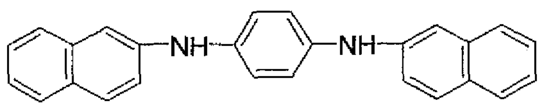

(Organic compound 106)

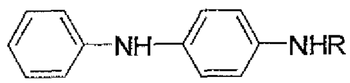

$R = C_7H_{15}$

(Organic compound 107)

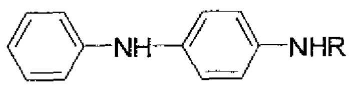

$R = C_8H_{17}$

(Organic compound 108)

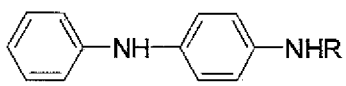

$R = C_9H_{19}$

(Organic compound 109)

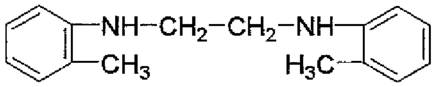

(Organic compound 110)

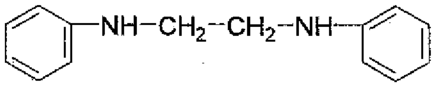

(Organic compound 111)

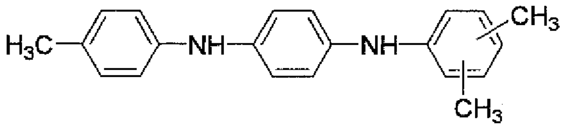

(Organic compound 112)

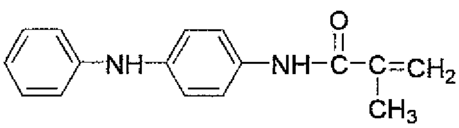

(Organic compound 113)

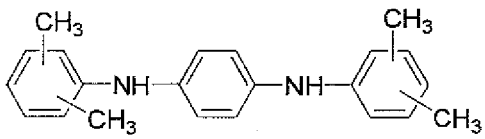

(Organic compound 114)

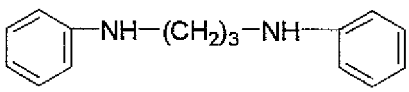

(Organic compound 115)

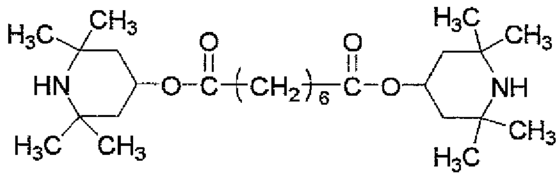

(Organic compound 116)

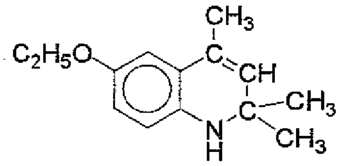

(Organic compound 117)

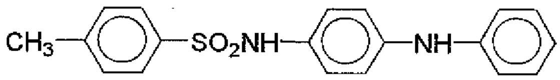

(Organic compound 118)

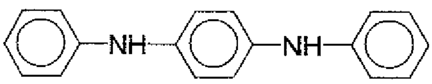

(Organic compound 119)

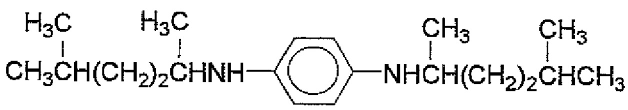

(Organic compound 120)

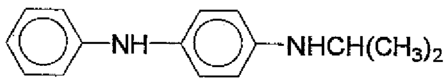

(Organic compound 121)

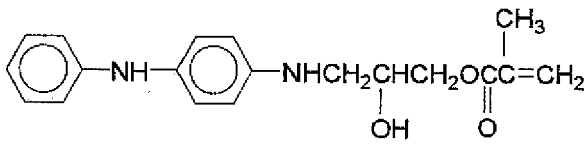

(Organic compound 122)

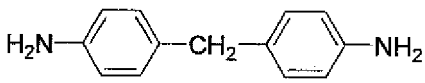

(Organic compound 123)

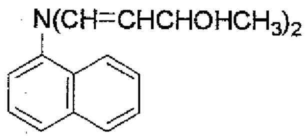

(Organic compound 124)

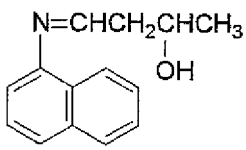

(Organic compound 125)

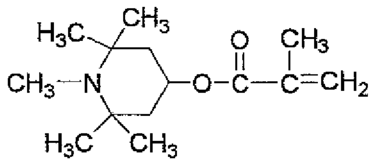

(Organic compound 126)

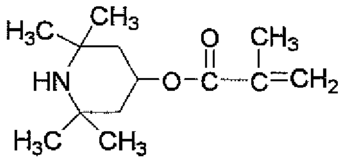

(Organic compound 127)

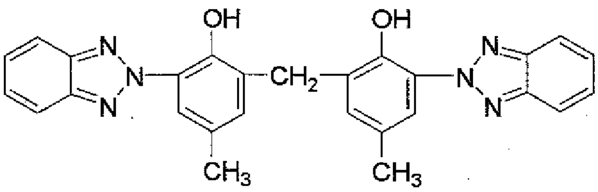

(Organic compound 128)

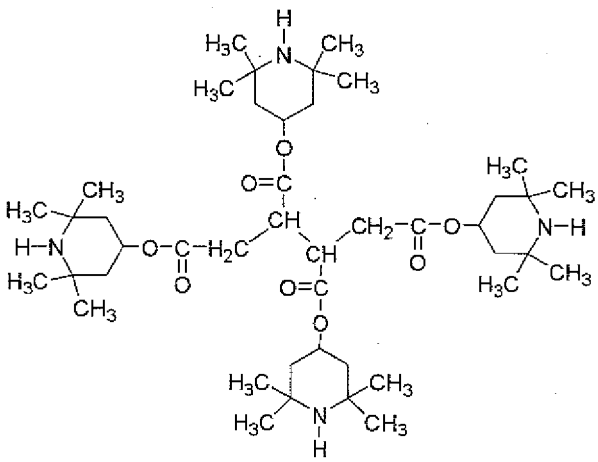

(Organic compound 129)

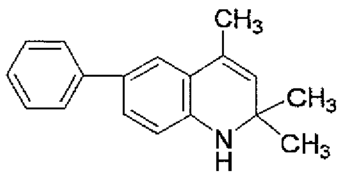

(Organic compound 130)

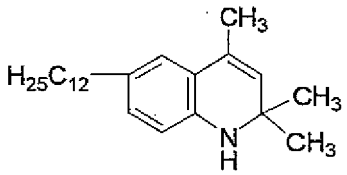

(Organic compound 131)

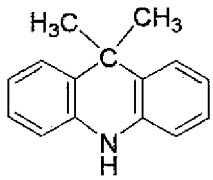

(Organic compound 132)

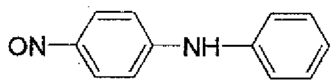

(Organic compound 133)

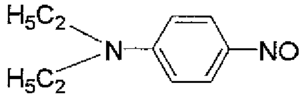

(Organic compound 134)

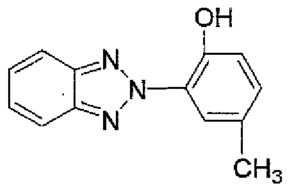

(Organic compound 135)

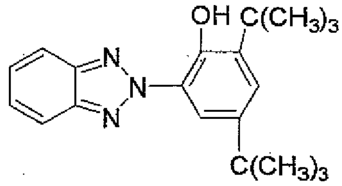

(Organic compound 136)

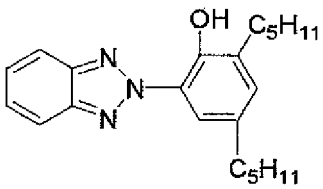

(Organic compound 137)

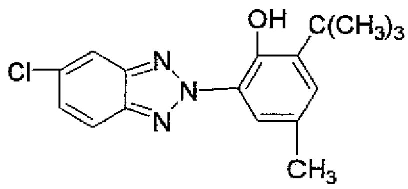

(Organic compound 138)

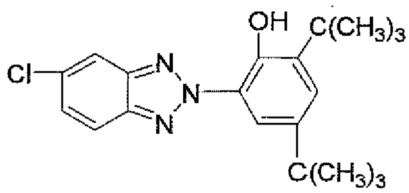

(Organic compound 139)

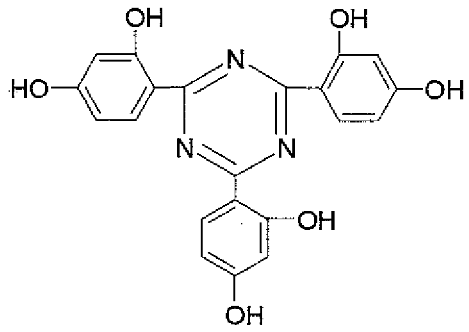

(Organic compound 140)

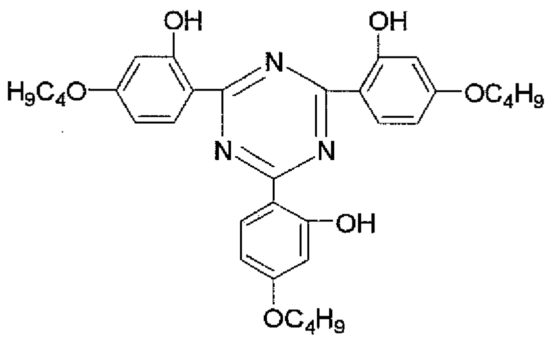

(Organic compound 141)

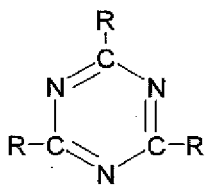

R= $-NHC_6H_4NHC_6H_5$ 、 $-OC_6H_4NHC_6H_5$

(Organic compound 142)

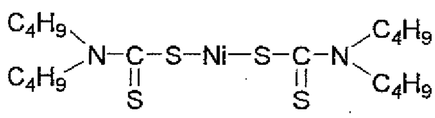

(Organic compound 143)

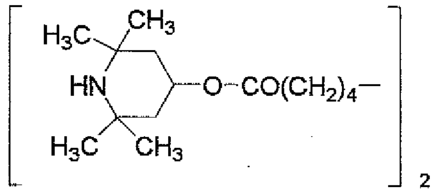

(Organic compound 144)

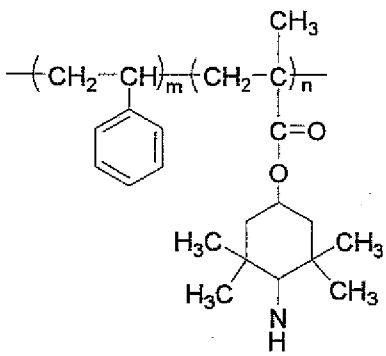

Thiol-based and thioether-based compounds
(Organic compounds 145 to 153)

(Organic compound 145)

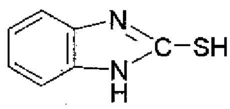

(Organic compound 146)

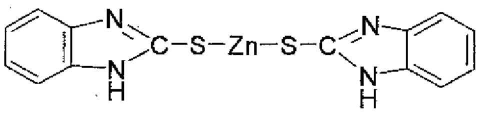

(Organic compound 147)

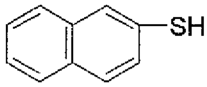

(Organic compound 148)

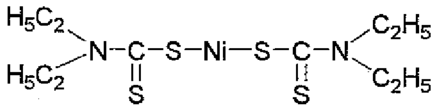

(Organic compound 149)

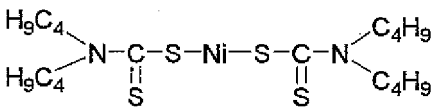

(Organic compound 150)

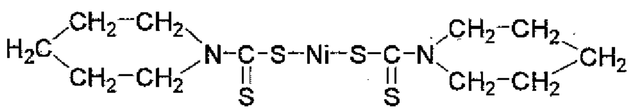

(Organic compound 151)

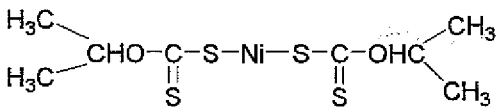

(Organic compound 152)

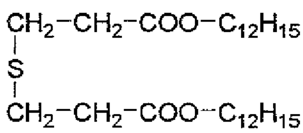

(Organic compound 153)

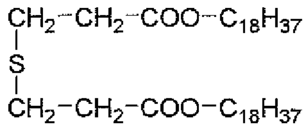

Phosphate ester-based compounds
(Organic compounds 154 to 160)

(Organic compound 154)

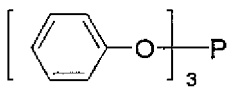

(Organic compound 155)

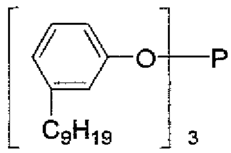

(Organic compound 156)

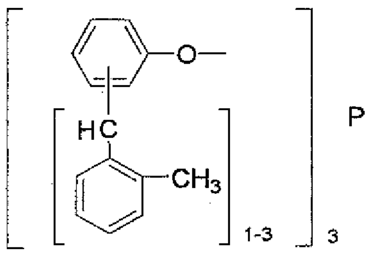

(Organic compound 157)

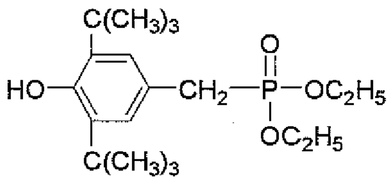

(Organic compound 158)

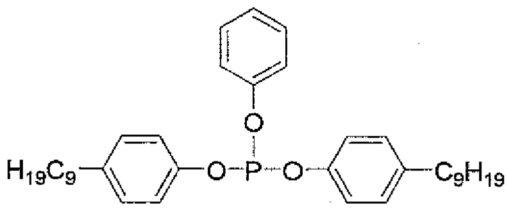

(Organic compound 159)

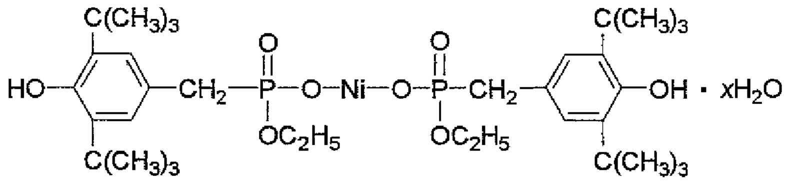

(Organic compound 160)

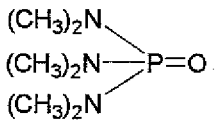

Phenol-based organic compound

(Organic compound 161)

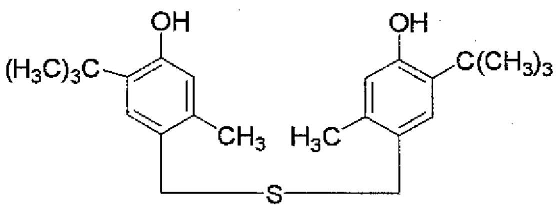

<Composition, coloring composition, conductive composition>
The composition, the coloring composition, and the conductive composition will be described. Hereinafter, the term "carbon black composition" indicates the composition, the coloring composition, or the conductive composition, unless specified otherwise.

The carbon black composition is a composition containing the carbon black according to the present invention and a medium, and the medium is not limited to a particular material, and any common commercially available medium

may be used. Typical example of the carbon black composition varies significantly according to the industrial field of application, and the medium may be, for example, in the liquid, solid, glass, or other phase. When the medium is in a solid or glass phase, the form of the carbon black composition may be either powdery, granular, film-shaped, plate-shaped, fibrous, linear, solenoidal, rod-shaped, or the like. Any method normally used in the industrial field of application may be used in processing of the composition into the final shape.

The carbon black composition may be used as it is as a member or a part in the industrial field of application after molded into a desirable shape. Any known method may be used in molding thereof into articles in various shapes. Alternatively, a carbon black composition layer may be formed by bonding and fixing a solid carbon black composition electrostatically onto a substrate, or a thin-film-molded carbon black composition may be laminated on a substrate.

In the case of a liquid carbon black composition, for example when a liquid carbon black composition layer is formed on a substrate such as of resin, metal, or paper, favorably used is a method of forming a liquid carbon black composition layer on a substrate by using a liquid coating machine or a method of forming a coated film by immersing a supporting plate in a liquid carbon black, or the like may be used, and when a liquid carbon black composition is to be fixed, favorably used is a method of injection-molding a liquid carbon black composition onto a substrate.

When the carbon black composition itself is molded and used, the final carbon black composition molding exhibits uniform coloring property and conductivity. Alternatively when a coloring composition is used, the colored product, such as image or coating, finally obtained by using the coloring composition shows uniform color. When a conductive composition is used, the finally product shows uniform conductivity.

The medium dispersing the carbon black may be selected from water, aqueous media, organic solvents, and known natural and synthetic resins.

The aqueous medium is an aqueous solution containing a soluble organic solvent in an amount normally of 10% or more in water, and examples of the organic solvents include alcohols such as methanol, ethanol, isopropanol, and n-propanol; glycols such as ethylene glycol, diethylene glycol, and glycerol; esters such as ethyl acetate and propyl acetate; ketones such as acetone and methylethylketone; amides such as N,N-dimethylformamide; and the like.

The water or the aqueous medium may contain a surfactant.

Examples of the known natural and synthetic resins include thermoplastic resins such as polyolefin resins, elastomer resins, polystyrene resins, engineering plastics, and super engineering plastics.

Typical examples of the polyolefin thermoplastic resins include olefinic homopolymers or copolymers, copolymers with another monomer, and the like, and typical examples thereof include high-, medium-, or low-density polyethylene prepared by a high-, medium-, and low-pressure method, polyethylene resins such as linear low-density polyethylene, polypropylene resin, poly-1,2-butadiene resin, ethylene-butene copolymers, copolymers of ethyl-, propyl-, or butyl-ester of acrylic or methacrylic acid, the chlorinated derivatives thereof, the mixture of two or more of them, and the like. Among the polyolefin thermoplastic resins, polyethylene resins and polypropylene resins are preferable.

Examples of the elastomer thermoplastic resins include olefinic elastomers such as ethylene propylene elastomer and EPDM elastomer; styrenic elastomers such as styrene-butadiene-styrene and styrene-isoprene-styrene; polyamine- and urethane-based thermoplastic resins, and the like. Examples of the polystyrene-based thermoplastic resins include polystyrene, ABS, AS, AAS resins, and the like. Others common resins include PVC, EEA, EVA, AES, ethylene vinylalcohol resins, and the like.

Examples of the engineering plastics include polyamide resins such as 6-, 6,6-, 6,10-, 12-, and MXD-nylon resins; polyester resins such as polycarbonate resin, polyethylene terephthalate resins, and polybutylene terephthalate resins; polyacetal resins, modified polyphenylene ether resins, and the like. Examples of the super engineering plastics include polysulfone resins, modified polysulfone resins, polyallylsulfone resins, polyketone resins, polyether imide resins, polyarylate resins, polyphenylene sulfide resins, liquid crystal polymers, polyether sulfone resins, polyether ether ketone resins, polyimide resins, polyamide-imide resins, fluoroplastics, and the like.

Other favorable examples include polyoxyalkylene resins, polysiloxane resins, polyurethane resins, polyallyl resins, acrylic resins, vinyl resins, styrenic resins, phenoxy resins, epoxy resins, cellulosic resins, polyester resins, amino resins, and the like. The resins may be used alone or in combination of two or more.

In addition, the resin for the carbon black composition preferably has functional groups. The functional group is, for example, a carboxyl, sulfonic acid, phosphoric acid, boric acid, or amino group, or the like. The functional groups allows increase of the affinity of the carbon black to the surface finishing agent when surface-treated carbon black is used, improving dispersibility of the carbon black and allowing easier processing in the dispersion step.

The content of the resin in the carbon black composition is preferably 1 to 200 parts by weight, more preferable 5 to 50 wt parts, with respect to 100 wt parts of the surface-treated carbon black.

In addition, an organic solvent may be added to the carbon black composition, for acceleration of adsorption of a resin on the surface-treated carbon black and reduction in viscosity of the composition. Examples of the organic solvents for use include aromatic hydrocarbons, alcohols, esters, ethers, ketones, glycol ethers, alicyclic hydrocarbons, aliphatic hydrocarbons, and the like.

The carbon black composition can be prepared by mixing and agitating the carbon black and the medium. The

mixing agitating method is not particularly limited, and may be a dry or wet dispersion method. Examples of the pulvelizer or dispersing machines for use during production by the dry dispersion method include three- and two-roll mills dispersing carbon black particles finely under shearing stress, hybridization systems of dispersing carbon black in high-speed air flow by the collisional force between carbon black particles or between the carbon black particles and the resin or dispersing machine wall, mechanofusion systems and Theta-composers of dispersing carbon black finely under strong compressive and shearing forces, ball mills and attritors of dispersing carbon black particles finely by the impact force of the medium such as glass bead or zirconia bead, CF mills, and the like.

In particular when a thermoplastic resin is used, it is preferable to knead the carbon black according to the present invention with a thermoplastic resin at a temperature of the melting point of the resin or higher and then mold the mixture while cooling into a suitable shape such as pellet, powder, aggregates, or the like. Examples of the kneading apparatuses include known apparatuses such as single screw extruder, twin screw extruder, two-roll mill, Banbury mixer, intermix, and pressurized kneader. Conductive thermoplastic resin moldings, films or sheetings in the shape of sheet, film, plate, or the other are molded by a known molding method of injection molding, vacuum molding, blow molding, inflation molding, or the like, and used in various applications.

The method of processing the carbon black composition into a desired shape is not particularly limited, and any known method may be used.

Examples of the pulvelizers or dispersing machines used in production by the wet dispersion method include the three- and two-roll mills, ball mill, and attriter described above, sand mill, basket mill and paint conditioner pulverizing carbon black particles finely by impact force of a medium such as glass bead or zirconia bead; disper, homogenizer, Genus and Clearmix® pulverizing into fine dispersion with a revolving blade generating shearing stress, cavitation, collisional force, or potential core; kneader, extruder, jet mill and others pulverizing carbon black particles into fine dispersion by the collisional and shearing forces between carbon black particles or between the carbon black particles and the resin or the dispersing machine wall; ultrasonic dispersing machine pulverizing into fine dispersion with ultrasonic wave; and the like.

An inorganic filler such as mica, glass fiber, silica, talc, calcium carbonate, zinc oxide, barium sulfate, stainless steel, copper oxide, nickel, nickel oxide, or zirconia silicate may be added to the carbon black composition, for improvement in heat resistance, dimensional stability, rigidity, toughness, impact resistance, or mechanical strength.

In addition, molding/processing aids such as known phenol-, phosphorus-based or other antioxidant, metal soap, and lubricant such as fatty acid amide derivative, flame retardants, plasticizers, and others may be added for prevention of the deterioration with time during kneading of the thermoplastic resin and the carbon black according to the present invention and for improvement in molding efficiency.

The carbon black composition is applicable to the fields demanding light-blocking property, blackness, etc. and also to applications in various fields demanding conductivity; typical examples of application include gravure ink, offset ink, back coat for magnetic recording media, electrophotographic material, automobile paint, fiber-reinforced plastic material, electromagnetic shielding material, high-pressure cable coating material, ignition code, planar heating unit, planar switch, conductive materials such as electrodes, packaging materials and test containers of electronic devices, IC and others; and it is particularly favorably applied as an imaging colorant material or as a member for an imaging apparatus.

## Best Mode for Carrying out the Invention

The following description will discuss the present invention based upon Examples. However, the present invention is not intended to be limited by the Examples.

## [EXAMPLE 1]

To 100 parts by weight of carbon black (N220, made by Mitsubishi Chemical Co., Ltd.; number average particle size of Feret's diameter = 210 nm) was added 50 parts by weight of an organic compound 48 (molecular weight 741, melting point = 125°C), and this was charged into a twin-screw extruder. This twin-screw extruder has two screws so as to carry out a mixing process, and a PCM-30 (made by Ikegai Corporation) is used. This extruder is not designed to carry out a continuous kneading process, but modified so as to carry out a stirring process by two screws with the outlet being sealed. After charging the two components into the device so as to have a degree of filling of 94%, a stirring process was carried out thereon in a heated state to a first temperature (Tp1) 160°C (melting point + 35°C) .

With respect to the stirring conditions, a first stirring velocity (Sv1) was set to 30 screw revolutions per minute, with a first processing time (T1) being set to 10 minutes; thus, the stirring process was carried out. After the stirring process, the stirred matter was sampled, and the grafted state was confirmed by using a Soxhlet extractor so that a grafted rate of about 30% was obtained. That is, it was confirmed that a grafting process was progressing on the surface of carbon black.

Then, with respect to the stirring conditions of a mixing device, a second stirring velocity (Sv2) was set to 50 screw revolutions per minute, with a second temperature (Tp2) being set to 180°C (melting point + 55°C), so that the conditions were changed so as to provide a higher mechanical shearing force; thus, the stirring process was carried out for 60 minutes as a second processing time (T2). Thereafter, the stirred matter was cooled, and the processed carbon black was taken out. The above-mentioned organic compound was grafted onto the surface of the carbon black at a grafted rate of 91%. Here, the primary particles were present thereon at 91% on a number basis. The carbon black had a number average particle size of Feret's diameter of 42 nm. This carbon black is referred to as "carbon black 1 of the present invention".

Preparation of carbon black composition Twenty parts of carbon black 1 and 100 parts of a polyethylene resin (high-density polyethylene resin (HDPE): Jaylex HD KM568A, manufactured by ,Japex Offshore Ltd. (MFR: 19 g/10 min, JIS-K6924-2)) were kneaded and melt-extruded into a strand, which was after cooling cut into pellets by using a pelletizer, to give a cylindrical carbon black-containing polyethylene resin (No.1).

[Examples 2 to 4]

The same processes as those of Example 1 were carried out except that the conditions were changed as shown in Tables 1 and 2 so that carbon blacks 2, 3 and 4 of the present invention were obtained. Carbon black compositions (No. 2, 3 and 4) were obtained in a manner similar to Example 1 except that the carbon blacks (No. 2, 3 and 4) were used respectively.

[Example 5]

To 100 parts by weight of carbon black (N220, made by Mitsubishi Chemical Co., Ltd.) was added 80 parts by weight of an organic compound 47 (molecular weight = 784, melting point = 221°C), and this was charged into a batch-type twin-screw extruder used in Example 1 so as to have a degree of filling of 94%. Next, a stirring process was carried out thereon in a heated state to 240°C (melting point + 19°C)(Tp1). In the stirring process, the stirring velocity (Sv1) was set to 35 screw revolutions per minute, and the stirring process was carried out for 15 minutes (T1). After the stirring process, the stirred matter was sampled, and the grafted state was confirmed by using a Soxhlet extractor so that a grafted rate of about 32% was obtained. That is, it was confirmed that a grafting process was progressing on the surface of carbon black. Next, with respect to the stirring conditions of a mixing device, the stirring velocity (Sv2) was set to 55 screw revolutions per minute, with the heating temperature (the second temperature Tp2) being set to 270°C (melting point + 49°C), so that the conditions were changed so as to provide a higher mechanical shearing force; thus, the stirring process was carried out for 70 minutes as the processing time (T2). Thereafter, the stirred matter was cooled, and the processed carbon black was taken out. The above-mentioned organic compound was grafted onto the surface of the carbon black at a grafted rate of 72%. The primary particles were present thereon at 53% on a number basis. Moreover, the carbon black had a number average particle size of Feret's diameter of 48 nm. This carbon black is referred to as "carbon black 5 of the present invention". Carbon black composition (No. 5) was obtained in a manner similar to Example 1 except that carbon black 5 was used.

[Examples 6 to 9]

The same processes as those of Example 1 were carried out except that the conditions were changed as shown in Tables 1 and 2 so that carbon blacks 6 to 9 of the present invention were obtained. Carbon black compositions (No. 6 to 9) were obtained in a manner similar to Example 1 except that the carbon blacks (No. 6 to 9) were used respectively.

[Example 10]

The same processes as those of Example 1 were carried out except that in place of carbon black (N220, made by Mitsubishi Chemical Co., Ltd.), Raven 1035 (made by Columbia Chemical Co., Ltd.) was used and that the other conditions were changed as shown in Tables 1 and 2 so that carbon black 10 of the present invention was obtained. Carbon black composition (No. 10) was obtained in a manner similar to Example 1 except that carbon black 10 was used.

[Example 11]

The same processes as those of Example 5 were carried out except that in place of carbon black (N220, made by Mitsubishi Chemical Co., Ltd.), Raven 1035 (made by Columbia Chemical Co., Ltd.) was used and that the other conditions were changed as shown in Tables 1 and 2 so that carbon black 11 of the present invention was obtained.

Carbon black composition (No. 11) was obtained in a manner similar to Example 1 except that carbon black 11 was used.

[Examples 12 and 13]

The same processes as those of Example 1 were carried out except that the conditions were changed as shown in Tables 1 and 2 so that carbon blacks 12 and 13 of the present invention were obtained. Carbon black compositions (No. 12 to 13) were obtained in a manner similar to Example 1 except that the carbon blacks (No. 12 to 13) were used respectively.

[Comparative Example 1]

Carbon black (N220, made by Mitsubishi Chemical Co., Ltd.) that had not been subjected to the surface treatment and the grafting process was defined as "carbon black 14." Carbon black composition (No. 14) was obtained in a manner similar to Example 1 except that carbon black 14 was used.

[Comparative Example 2]

In Example 1, after a lapse of the first processing time (T1) of one minute, a sample was taken out. This sample was defined as" carbon black 15." Carbon black composition (No. 15) was obtained in a manner similar to Example 1 except that carbon black 15 was used.

[Comparative Example 3]

The same processes as those of Example 1 were carried out except that the organic compound was changed to stearic acid (molecular weight = 284, melting point = 70°C) (comparative compound 1) that would generate no free radicals. This was defined as "carbon black 16." Carbon black composition (No. 16) was obtained in a manner similar to Example 1 except that carbon black 16 was used.

[Comparative Example 4]

The same processes as those in the carbon black 16 of Comparative Carbon black 3 were carried out except that the carbon black was changed to another carbon black having a number average particle size of Feret's diameter of 500 μm. To 100 parts of the carbon black 1 of the present invention was added and mixed 200 parts of the processed carbon black so that carbon black having a number average particle size of Feret's diameter of 320 μm and a number rate of primary particles of 15% was obtained. This was defined as carbon black 17. Carbon black composition (No. 17) was obtained in a manner similar to Example 1 except that carbon black 17 was used.

With respect to each of the carbon blacks 1 to 17, a number average particle size of Feret's diameter thereof and a number rate of primary particles were shown in Table 3.

Table 1

| | Organic compound | | | | First temperature Tp1 (°C) | Difference from melting point of organic compound (°C) | Degree of filling (%) | First stirring velocity (number of revolutions/min) Sv1 | First processing time (minute) T1 | Grafted rate (%) |
|---|---|---|---|---|---|---|---|---|---|---|
| | Number | Melting point (°C) | Molecular weight | Added amount (parts) | | | | | | |
| Example1 | 48 | 125 | 741 | 50 | 160 | +35 | 94 | 30 | 10 | 30 |
| Example2 | 48 | 125 | 741 | 50 | 150 | +25 | 98 | 30 | 10 | 25 |
| Example3 | 48 | 125 | 741 | 50 | 150 | +25 | 98 | 30 | 10 | 25 |
| Example4 | 48 | 125 | 741 | 50 | 150 | +25 | 98 | 40 | 10 | 40 |
| Example5 | 47 | 221 | 784 | 80 | 240 | +19 | 94 | 35 | 15 | 32 |
| Example6 | 88 | 186 | 545 | 50 | 216 | +30 | 98 | 35 | 15 | 35 |
| Example7 | 115 | 84 | 481 | 50 | 104 | +20 | 97 | 30 | 5 | 32 |
| Example8 | 127 | 195 | 659 | 50 | 215 | +20 | 98 | 35 | 5 | 36 |
| Example 9 | 128 | 132 | 791 | 50 | 145 | +13 | 91 | 30 | 5 | 26 |
| Example 10 | 48 | 125 | 741 | 50 | 150 | +25 | 94 | 30 | 10 | 33 |
| Example 11 | 47 | 221 | 784 | 80 | 231 | +10 | 98 | 30 | 10 | 35 |
| Example 12 | 48 | 125 | 741 | 50 | 160 | +35 | 94 | 30 | 10 | 30 |
| Example 13 | 48 | 125 | 741 | 50 | 150 | +25 | 98 | 30 | 5 | 15 |
| Comparative Example 1 | None | - | - | - | - | - | - | - | - | - |
| Comparative Example2 | 48 | 125 | 741 | 50 | 150 | +25 | 94 | 30 | 1 | 2 |
| Comparative Example3 | Comparative compound 1 | 70 | 284 | 50 | 105 | +35 | 94 | 30 | 10 | 0 |

Table 2

| | Second temperature condition (°C) Tp2 | Difference from melting point of organic compound (°C) | Second stirring velocity (number of revolutions/min) Sv2 | Processing time (minute) T2 | Grafted rate |
|---|---|---|---|---|---|
| Example 1 | 180 | +55 | 50 | 60 | 91 |
| Example2 | 190 | +65 | 55 | 60 | 93 |
| Example3 | 220 | +95 | 60 | 60 | 95 |
| Example4 | 220 | +65 | 65 | 60 | 97 |
| Example 5 | 270 | +49 | 55 | 70 | 72 |
| Example6 | 266 | +80 | 60 | 70 | 83 |
| Example7 | 174 | +90 | 55 | 40 | 93 |
| Example8 | 265 | +70 | 50 | 60 | 94 |
| Example9 | 210 | +78 | 50 | 40 | 91 |
| Example 10 | 190 | +65 | 60 | 40 | 94 |
| Example 11 | 250 | +29 | 55 | 40 | 90 |
| Example 12 | 180 | +55 | 50 | 40 | 65 |
| Example 13 | 190 | +65 | 55 | 10 | 35 |
| Comparative Example 1 | - | - | - | - | - |
| Comparative Example2 | - | - | - | - | 2 |
| Comparative Example3 | 125 | +55 | 50 | 30 | 0 |

[Evaluation]

Evaluation 1) Lack in uniformity of volume resistivity

Each of the carbon black compositions 1 to 17 obtained above was press-molded at 200°C, to give a test sample of 10 cmx10 cmx0.2 cm in size.
The specific volume resistivities of 10 test samples were determined according to the method of The Society of Rubber Industry, Japan, SRIS-2301, and the dispersion of conductivity was evaluated.
The evaluation criteria are as follows:

A: Dispersion of specific volume resistivity in 10 samples: less than ±1%
B: Dispersion of specific volume resistivity in 10 samples: ±1% or more and less than 5%
C: Dispersion of specific volume resistivity in 10 samples: more than ±5%

Evaluation 2) Evaluation of lack in uniformity of coloring
Each of the carbon black compositions 1 to 17 obtained above was press-molded at 200°C, to give 10 test samples of 30 cm×30 cm×0.1 cm in size.
The transmission density thereof was determined by using Sakura Densitometer PDA-62 (manufactured by KONICA MINOLTA HOLDINGS, INC.), and the differences thereof among the samples different in composition were determined. The maximum differences were used as the evaluation results. Samples having a difference in transmission density of 0.10 or more are unpractical for use, because the lack in uniformity of density is distinctively high.
Evaluation 3) Evaluation of lack in uniformity of glossiness

Each of the carbon black compositions 1 to 17 obtained above was press-molded at 200°C, to give 10 test samples of 10 cmx10 cm×0.2 cm in size.
The dispersion of the glossiness of each sample was determined by using a glossimeter (manufactured by NIPPON DENSHOKU INDUSTRIES CO., LTD.). The surface glossiness was determined at a measurement angle of 20°.
The evaluation criteria are as follows:

A: Dispersion of glossiness in 10 samples: ±3% or less
B: Dispersion of glossiness in 10 samples: more than ±3 and 6% or less
C: Dispersion of glossiness in 10 samples: more than ±6%

The results obtained in evaluations 1) and 2) are summarized in Table 3.
These results are summarized in Table 3.
Table 3

| | Number average particle size of Feret's diameter of carbon black (nm) | Rate of primary particles in number of carbon black (%) | Number average particle size of Feret's diameter of primary particles of carbon black (nm) | Lack of uniformity of volume resistance | Lack of uniformity of coloring | Lack of uniformity of gloss |
|---|---|---|---|---|---|---|
| Example1 | 42 | 65 | 25 | A | 0.03 | A |
| Exampie2 | 40 | 72 | 25 | A | 0.02 | A |
| Example3 | 39 | 89 | 25 | A | 0.02 | A |
| Example4 | 28 | 98 | 25 | A | 0.01 | A |
| Example5 | 48 | 53 | 28 | A | 0.02 | A |
| Example6 | 47 | 87 | 28 | A | 0.02 | A |
| Example7 | 41 | 89 | 28 | A | 0.01 | A |
| Example8 | 29 | 97 | 28 | A | 0.01 | A |
| Example9 | 36 | 77 | 28 | A | 0.02 | A |
| Example10 | 32 | 87 | 28 | A | 0.01 | A |
| Example11 | 33 | 83 | 28 | A | 0.01 | A |
| Example12 | 80 | 35 | 25 | A | 0.02 | A |
| Example13 | 180 | 7 | 25 | B | 0.08 | B |
| Comparative Example1 | 210 | 0 | - | C | 0.22 | C |
| Comparative Example2 | 210 | 1 | could not be measured | C | 0.23 | C |
| Comparative Example3 | 210 | 0 | - | C | 0.22 | C |
| Comparative Example4 | 320 | 15 | 25 | C | 0.12 | B |

The results shown in Table 3 indicate that the samples obtained in Examples 1 to 13 were improved in lack in uniformity of conductivity, coloring property, and glossiness from those obtained in Comparative Examples 1 to 4.

[Experiment 2]

[Example 14]

Twenty parts by mass of the carbon black 1 prepared in Example 1, 5 parts of a dispersant (Solsperse17,000 (manufactured by Avecia Biologics Limited)), and 75 parts of a medium (Isopar L, manufactured by Exxon Mobil Corporation.) were dispersed ultrasonically, to give a carbon black composition 18. Paper was colored with the carbon black composition 18 by spray coating.

[Comparative Examples 5 to 8]

Carbon black compositions 19 to 22 were prepared in a similar manner to Example 14, except that carbon blacks 14 to 17 were used respectively, and paper was colored similarly with each carbon black composition.
The lack in uniformity of density of each of these colored papers was determined visually.

A: No lack in uniformity of density
B: Slight lack in uniformity of density
C: Some noticeable lack in uniformity of density; most people can recognize it. D: Distinctive lack in uniformity of density

Table 4

| | Number average particle size of Feret's diameter of carbon black (nm) | Rate of primary particles in number of carbon black (%) | Number average particle size of Feret's diameter of primary particles of carbon black (nm) | Lack of uniformity of coloring |
|---|---|---|---|---|
| Example14 | 42 | 65 | 25 | A |
| Comparative Example5 | 210 | 0 | - | D |
| Comparative Example6 | 210 | 1 | could not be measured | D |
| Comparative Example7 | 210 | 0 | - | D |
| Comparative Example8 | 320 | 15 | 25 | C |

The results above show that the colored paper in Example 14 prepared with a liquid carbon black composition showed favorable coloring property, while those obtained in Comparative Examples 5 to 8 did not show such and advantageous effect.

[Advantageous effect of the invention]

The present invention provides a composition superior in dispersibility and compatibility and also in uniformity of coloring property and conductivity and a composition giving a final product superior in uniformity of coloring property and conductivity. Such a composition can be used in various industrial fields of application.

Brief Description of the Drawings

Fig. 1 is an explanatory drawing for Feret's

diameter.
Fig. 2 is an explanatory drawing for secondary particles and basic particles.

Fig. 3 is an explanatory drawing for primary particles.
Fig. 4 is an explanatory drawing for conventional carbon black.

## Claims

1. A composition containing carbon black, wherein a number average particle size of Feret's diameter is 5 to 300 nm and primary particles are contained at 5% or more on a number basis.

2. The composition of Claim 1, wherein the carbon black is surface-treated with an organic compound.

3. The composition of Claim 2, wherein the organic compound includes at least one of a phenol-based compound and/or an amine-based compound.

4. A composition for coloring which contains carbon black, wherein a number average particle size of Feret's diameter is 5 to 300 nm and primary particles are contained at 5% or more on a number basis.

5. The composition for coloring of Claim 4, wherein the carbon black is surface-treated with an organic compound.

6. The composition for coloring of Claim 5, wherein the organic compound includes at least one of a phenol-based compound and/or an amine-based compound.

7. A conductive composition which contains carbon black, wherein a number average particle size of Feret's diameter is 5 to 300 nm and primary particles are contained at 5% or more on a number basis.

8. The conductive composition of Claim 7, wherein the carbon black is surface-treated with an organic compound.

9. The conductive composition of Claim 8, wherein the organic compound includes at least one of a phenol-based compound and/or an amine-based compound.

Fig. 1

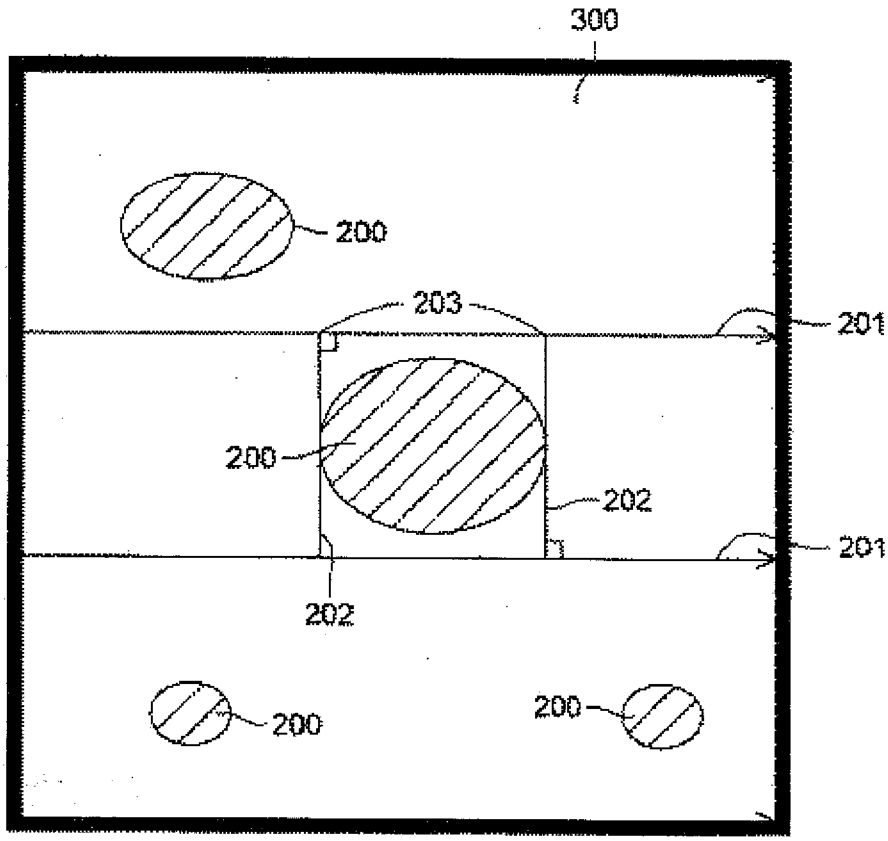

Fig. 2

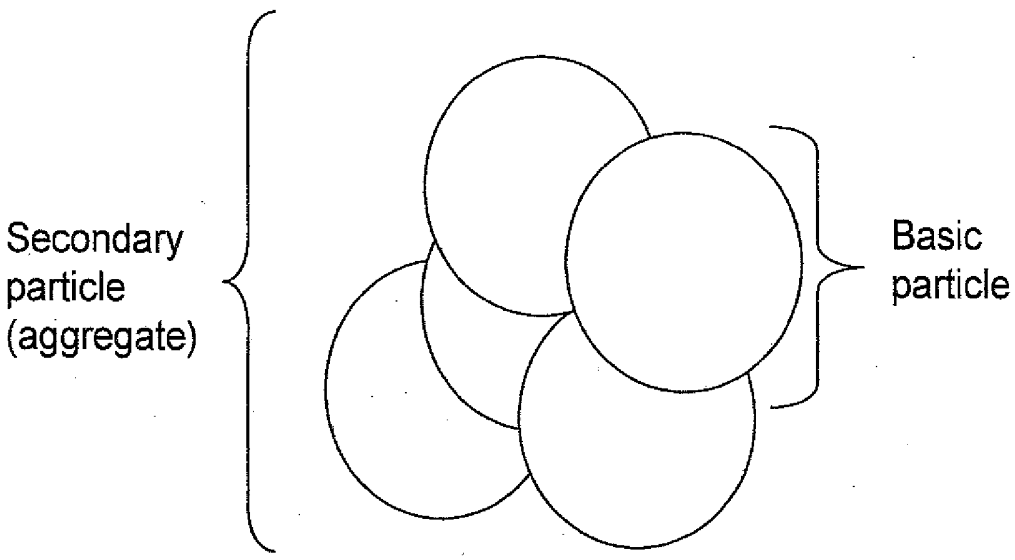

Fig. 3

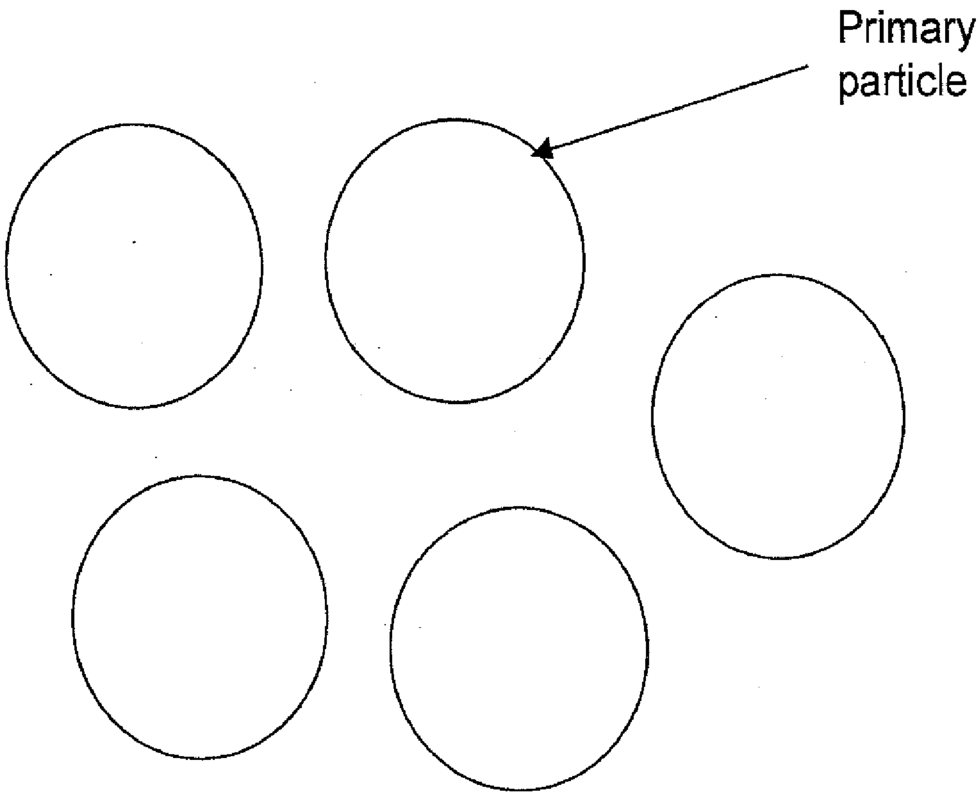

Fig. 4

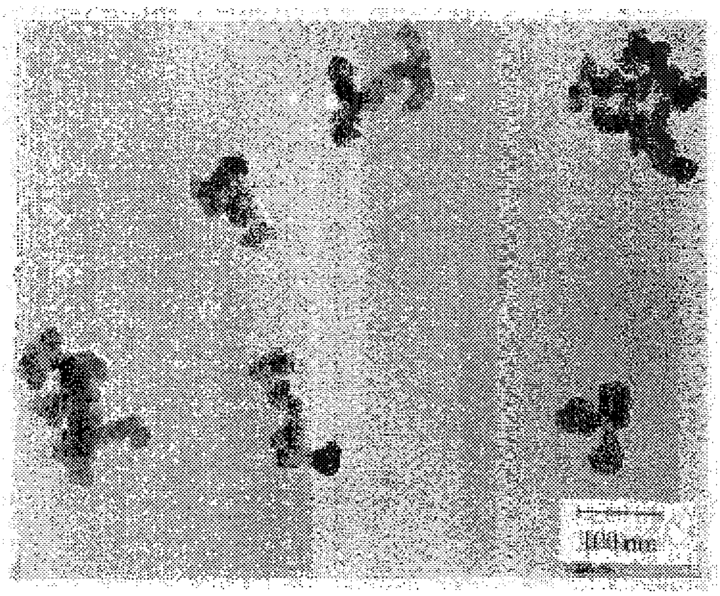

**INTERNATIONAL SEARCH REPORT**

International application No.
PCT/JP2005/011943

A. CLASSIFICATION OF SUBJECT MATTER
*C09C1/48*(2006.01), *1/56*(2006.01)

According to International Patent Classification (IPC) or to both national classification and IPC

B. FIELDS SEARCHED

Minimum documentation searched (classification system followed by classification symbols)
*C09C1/48*(2006.01), *1/56*(2006.01)

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2005 |
| Kokai Jitsuyo Shinan Koho | 1971-2005 | Toroku Jitsuyo Shinan Koho | 1994-2005 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | Edited by Carbon Black Kyokai, Carbon Black Binran (3rd edition), 15 April, 1995 (15.04.95), issued by Carbon Black Kyokai, table 2.7; Figs. 2.17, 2.18, 2.19, 2.20, 2.34; tables 2.15, 2.16; pages 72 to 76, 167 to 175 | 1-9 |

☐ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 06 October, 2005 (06.10.05) | 25 October, 2005 (25.10.05) |

| Name and mailing address of the ISA/ | Authorized officer |
|---|---|
| Japanese Patent Office | |
| Facsimile No. | Telephone No. |

Form PCT/ISA/210 (second sheet) (January 2004)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 6417283 B